# EUROPEAN PATENT APPLICATION

(11) **EP 4 539 375 A1**
(43) Date of publication of application: **16.04.2025**
(21) Application number: 22945363.4
(22) Date of filing: 10.06.2022
(51) Int. Cl.: H04L 5/00

(54) **INDICATION METHODS FOR TRANSMISSION CONFIGURATION INDICATION STATE, AND APPARATUSES**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/098274
(87) International publication number: WO 2023/236222

(57) **Abstract**

Disclosed in the embodiments of the present disclosure are indication methods for a transmission configuration indication state, which can be applied to the technical field of communications. A method executed by a terminal comprises: receiving first indication information sent by a network device, the first indication information being used for indicating at least one and/or at least one pair of transmission configuration indication (TCI) states used for joint transmission (201). Therefore, the terminal can accurately determine which first reference signal is quasi co-located with each DMRS port for joint transmission, thereby reliably realizing multi-TRP-based joint transmission, and improving the transmission performance of multi-TRP-based CJT.

## Description

### TECHNICAL FIELD

The disclosure relates to the field of communication technology, and more particularly, to a method and an apparatus for indicating a transmission configuration indication state.

### BACKGROUND

Currently, in the discussion of Multiple-Input Multiple-Output (MIMO) technology, multiple transmission reception points (TRP) are discussed to achieve coherent joint transmission (CJT) in a case that there is ideal backhaul connections between the TRPs. Since the multiple TRPs may be located at different locations, propagation distances and directions of the multiple TRPs to a terminal may be different from each other, so that transmission parameters of the multiple TRPs on the terminal side may be different. Currently, how to indicate a transmission configuration indication (TCI) state for the CJT of the multiple TRPs is an issue that needs to be solved urgently.

### SUMMARY

Embodiments of the present disclosure provide a method and apparatus for indicating a transmission configuration indication state.

A first aspect of embodiments of the present disclosure provides a method for indicating a transmission configuration indication state, performed by a terminal. The method includes: receiving first indication information sent by a network device, in which the first indication information is configured to indicate at least one transmission configuration indication (TCI) state and/or at least one pair of TCI states for joint transmission.

In the present disclosure, the terminal can receive the at least one TCI state and/or at least one pair of TCI states for joint transmission sent by the network device, and then can determine the first reference signal that is in a quasi co-location relationship with each DMRS port of the joint transmission. In this way, joint transmission based on multiple TRPs can be reliably realized, and the transmission performance of CJT based on multiple TRPs is improved.

A second aspect of embodiments of the present disclosure provides a method for indicating a transmission configuration indication state, performed by a network device, and the method includes: sending first indication information to a terminal, in which the first indication information is configured to indicate at least one transmission configuration indication (TCI) state and/or at least one pair of TCI states for joint transmission.

In the present disclosure, the network device can send the at least one TCI state and/or at least one pairs of TCI state for joint transmission to the terminal, so that the terminal can accurately determine the first reference signal indicated by which TCI state or which pair of TCI states is in a quasi co-location relationship with each DMRS port of the joint transmission, so that joint transmission based on multiple TRPs can be reliably realized, and the transmission performance of CJT based on multiple TRPs is improved.

A third aspect of embodiments of the present disclosure provides a communication device, applied to a terminal, and includes:
a transceiver module, configured to receive first indication information sent by a network device, in which the first indication information is configured to indicate at least one transmission configuration indication (TCI) state and/or at least one pair of TCI states for joint transmission.

A fourth aspect of embodiments of the present disclosure provides a communication device, applied to a network device, and includes:
a transceiver unit, configured to send first indication information to a terminal, in which the first indication information is configured to indicate at least one transmission configuration indication (TCI) state and/or at least one pair of TCI states for joint transmission.

A fifth aspect of embodiments of the present disclosure provides a communication device. The communication device includes: a processor and a memory for storing a computer program. The processor is configured to execute the computer program stored in the memory, so that the communication device performs the method according to the first aspect.

A sixth aspect of embodiments of the present disclosure provides a communication device. The communication device includes: a processor and a memory for storing a computer program. The processor is configured to execute the computer program stored in the memory, so that the communication device performs the method according to the second aspect.

A seventh aspect of embodiments of the present disclosure provides a communication device. The communication device includes a processor and an interface circuit. The interface circuit is configured to receive code instructions and transmit the code instructions to the processor; and the processor is configured to run the code instructions to perform the method according to the first aspect.

An eighth aspect of embodiments of the present disclosure provides a communication device. The communication device includes a processor and an interface circuit. The interface circuit is configured to receive code instructions and transmit the code instructions to the processor; and the processor is configured to run the code instructions to perform the method according to the second aspect.

A ninth aspect of embodiments of the present disclosure provides a system for indicating a transmission configuration indication state. The system includes the communication device according to the third aspect and the communication device according to the fourth aspect, or the system includes the communication device according to the fifth aspect and the communication device according to the sixth aspect, or the system includes the communication device according to the seventh aspect and the communication device according to the eighth aspect.

A tenth aspect of embodiments of the present disclosure provides a computer-readable storage medium for storing instructions used by a terminal. When the instructions are executed, the terminal is caused to perform the method according to the first aspect.

An eleventh aspect of embodiments of the present disclosure provides a computer-readable storage medium for storing instructions used by a network device. When the instructions are executed, the network device is caused to perform the method according to the second aspect.

A twelfth aspect of embodiments of the present disclosure provides a computer program product including a computer program that, when run on a computer, causes the computer to perform the method according to the first aspect.

A thirteenth aspect of embodiments of the present disclosure provides a computer program product including a computer program that, when run on a computer, causes the computer to perform the method according to the second aspect.

A fourteenth aspect of embodiments of the present disclosure provides a chip system, including at least one processor and an interface, for supporting a terminal to implement the functions involved in the first aspect, for example, determining or processing at least one of data or information involved in the above methods. In a possible design, the chip system further includes a memory for storing necessary computer programs and data for the terminal. The chip system may be composed of chips, or may include chips and other discrete devices.

A fifteenth aspect of embodiments of the present disclosure provides a chip system, including at least one processor and an interface, for supporting a network device to implement the functions involved in the first aspect, for example, determining or processing at least one of data or information involved in the above methods. In a possible design, the chip system further includes a memory for storing necessary computer programs and data for the terminal. The chip system may be composed of chips, or may include chips and other discrete devices.

A sixteenth aspect of embodiments of the present disclosure provides a computer program that, when run on a computer, causes the computer to perform the method according to the first aspect.

A seventeenth aspect of embodiments of the present disclosure provides a computer program that, when run on a computer, causes the computer to perform the method according to the first aspect.

### BRIEF DESCRIPTION OF THE DRAWINGS

In order to clearly illustrate the technical solutions in embodiments of the disclosure or the background technology, a description will be made below to accompanying drawings used in the embodiments of the disclosure or the background technology.
FIG. 1 is a structure schematic diagram illustrating a communication system provided by an embodiment of the present disclosure.
FIG. 2 is a flow chart of a method for indicating a transmission configuration indication state provided by an embodiment of the present disclosure.
FIG. 3 is a flow chart of a method for indicating a transmission configuration indication state provided by an embodiment of the present disclosure.
FIG. 4 is a flow chart of a method for indicating a transmission configuration indication state provided by an embodiment of the present disclosure.
FIG. 5 is a flow chart of a method for indicating a transmission configuration indication state provided by an embodiment of the present disclosure.
FIG. 6 is a flow chart of a method for indicating a transmission configuration indication state provided by an embodiment of the present disclosure.
FIG. 7 is a flow chart of a method for indicating a transmission configuration indication state provided by an embodiment of the present disclosure.
FIG. 8 is a flow chart of a method for indicating a transmission configuration indication state provided by an embodiment of the present disclosure.
FIG. 9 is a flow chart of a method for indicating a transmission configuration indication state provided by an embodiment of the present disclosure.
FIG. 10 is a flow chart of a method for indicating a transmission configuration indication state provided by an embodiment of the present disclosure.
FIG. 11 is a flow chart of a method for indicating a transmission configuration indication state provided by an embodiment of the present disclosure.
FIG. 12 is a flow chart of a method for indicating a transmission configuration indication state provided by an embodiment of the present disclosure.
FIG. 13 is a flow chart of a method for indicating a transmission configuration indication state provided by an embodiment of the present disclosure.
FIG. 14 is a block diagram of a communication device provided by an embodiment of the present disclosure.
FIG. 15 is a block diagram of a communication device provided by an embodiment of the present disclosure.
FIG. 16 is a block diagram of a chip provided by an embodiment of the present disclosure.

### DETAILED DESCRIPTION

For ease of understanding, terminologies involved in the present disclosure are first introduced.
1. Transmission configuration indication (TCI)
   It is used to inform a terminal which synchronization signal block (SSB) or channel state information reference signal (CSI-RS) sent by a network device is in a quasi co-location relationship with a demodulation reference signal corresponding to a physical downlink control channel (PDCCH) or a physical downlink shared channel (PDSCH); or inform the terminal which reference signal (such as a sounding reference signal (SRS)) sent by the terminal or which SSB or CSI-RS sent by a base station is in a quasi co-location relationship with the demodulation reference signal corresponding to a physical uplink control channel (PUCCH), a physical uplink shared channel (PUSCH). The quasi co-location includes one of the following transmission parameters: an average delay, a delay spread, a Doppler shift, a Doppler spread, and a spatial reception parameter.
2. Transmission and reception point (TRP)
   The TRP is equivalent to a traditional base station, but in some cases, a cell may be covered by more than one TRP, and jointly covered by multiple TRPs.
3. Coherent joint transmission (CJT)
   The CJT refers to a joint transmission through multiple transmission points, such as TRPs, to improve the overall signal at the terminal.
4. Downlink control information (DCI)
   Downlink control information carried by a physical downlink control channel (PDCCH) and sent by a network device to a terminal, includes uplink and downlink resource allocation, Hybrid Automatic Repeat reQuest (HARQ) information, and power control, etc.
5. Reference signal (RS)
   The reference signal is a "pilot" signal, which is a known signal provided by a transmitter to a receiver for channel estimation or channel detection. It can be used for coherent detection and demodulation, beam measurement, or channel state information measurement of a terminal or coherent detection and monitoring, or channel quality measurement of a network device.
6. Quasi co-location (QCL)
   The QCL is a channel state assumption. If there is a QCL relationship between a Demodulation Reference Signal (DMRS) port of a certain channel and a reference signal, a transmission parameter of the DMRS port of the certain channel is the same as a transmission parameter corresponding to the reference signal. The transmission parameter includes at least one of the following: an average delay, a delay spread, a Doppler shift, a Doppler spread, or a spatial reception parameter.
7. Demodulation Reference Signal (DMRS)

When a network device schedules data, such as physical downlink shared channel (PDSCH) data, it may indicate a corresponding DMRS port, including a number of DMRS ports and a DMRS port identifier. DMRS ports corresponding to different DMRS port identifiers are orthogonal. The number of DMRS ports is equal to a number of transmission layers of the PDSCH data. If different terminals occupy the same time-frequency resources to receive the PDSCH data, the network device may allocate different DMRS port identifiers to ensure that DMRS orthogonality.

Currently, a front loaded DMRS is divided into two types, and length of an orthogonal frequency division multiplexing (OFDM) symbol occupied by the front loaded DMRS can be 1 or 2. The front loaded DMRS occupies a beginning location of the PDSCH. For the type 1, when a number of symbols is 2, DMRS ports 0, 1, 4, and 5 are code division multiplexing (CDM) group 1, and DMRS ports 2, 3, 6, and 7 are CDM group 2. When the number of symbols is 1, DMRS ports 0 and 1 are CDM group 1, and DMRS ports 2 and 3 are CDM group 2. A DMRS of type 1 supports a maximum of 8 layers of transmission. For example, terminal 1 uses 4 layers for pairing and terminal 2 uses 4 layer 4s pairing, or terminal 1 to terminal 8 each uses one layer for pairing. For type 2, when the number of symbols is 2, DMRS ports 0, 1, 6, and 7 are CDM group 1, DMRS ports 2, 3, 8, and 9 are CDM group 2, and DMRS ports 4, 5, 10, and 11 are CDM Group 3. When the number of symbols is 1, DMRS ports 0 and 1 are CDM group 1, DMRS ports 2 and 3 are CDM group 2, and DMRS ports 4 and 5 are CDM group 3. A DMRS of type 2 supports a maximum of 12 layers of transmission. An additional DMRS means repeating the front loaded DMRS in subsequent symbols, and a CDM group of the additional DMRS is the same as that of the front loaded DMRS.

In order to better understand the method for indicating a transmission configuration indication stat according to embodiments of the present disclosure, a communication system to which embodiments of the present disclosure are applied is first described below.

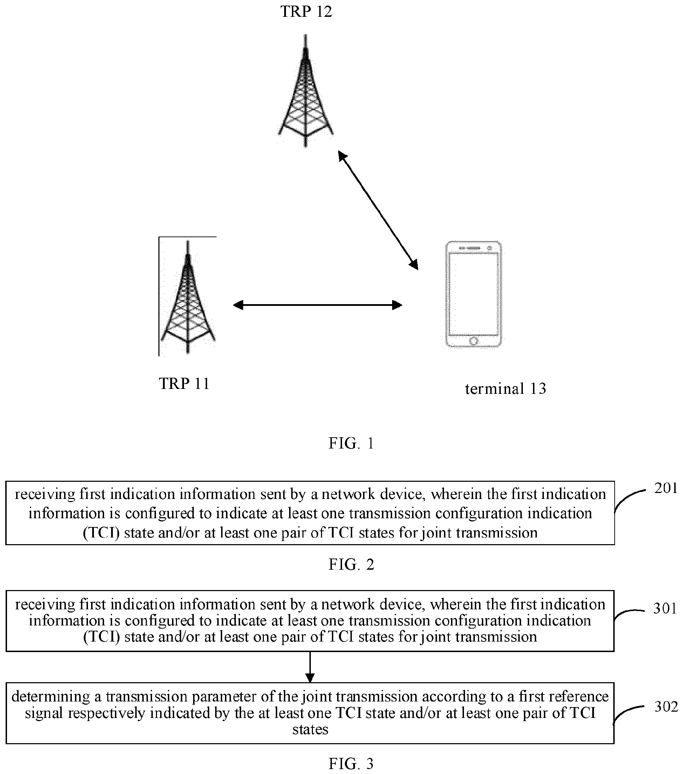

With reference to FIG. 1, FIG. 1 is a structure schematic diagram illustrating a communication system provided by an embodiment of the present disclosure. The communication system may include but is not limited to a network device, such as a TRP, and a terminal. The number and form of devices shown in FIG. 1 are only for examples and do not constitute a limitation on the embodiment of the present disclosure. In actual applications, it may include two or more network devices, and two or more terminals. The communication system shown in FIG. 1 includes two TRPs, i.e., TRP 11 and TRP 12, and one terminal 13 as an example.

It should be noted that the technical solutions of the embodiments of the present disclosure can be applied to various communication systems, such as a long term evolution (LTE) system, a fifth generation (5th generation, 5G) mobile communication system, a 5G new radio (NR) system, or other future new mobile communication systems.

TRP11 and TRP12 in embodiments of the present disclosure are entities on a network side that are used to transmit or receive signals. For example, they can be respectively evolved base stations (evolved NodeB, eNB), transmission reception points (TRP), next generation base stations (next generation NodeB, gNB) in an NR system, base stations in other future mobile communication systems, or wireless access nodes in wireless networking (Wi-Fi^{™}) systems, etc. The embodiments of the present disclosure do not limit the specific technologies and specific device forms used by the network device. The network device provided by the embodiments of the present disclosure may be composed of a centralized unit (CU) and distributed units (DU). The CU may also be called a control unit (control unit). By using the CU-DU structure, the protocol layers of the network device, such as the base station, can be separated, with some protocol layer functions placed on the CU for centralized control, and part of or all of the remaining protocol layer functions distributed in the DUs, and the CU centrally controls the DUs. In the present disclosure, the TRP can also be replaced by a Remote Radio Head, or an antenna panel, or the like.

The terminal 13 in the embodiments of the present disclosure is an entity on a user side for receiving or transmitting signals, such as a mobile phone. The terminal may also be called a terminal device (terminal), user equipment (UE), a mobile station (MS), a mobile terminal device (mobile terminal, MT), etc. The terminal can be a car with communication functions, a smart car, a mobile phone, a wearable device, a tablet (Pad), a computer with a wireless transceiver function, a virtual reality (VR) terminal, an augmented reality ( augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and specific device form used by the terminal.

It can be understood that the communication system described in the embodiments of the present disclosure is to more clearly illustrate the technical solutions of the embodiments of the present disclosure, and does not constitute a limitation on the technical solutions provided by the embodiments of the present disclosure. As those skilled in the art may know, with the evolution of system architecture and the emergence of new service scenarios, the technical solutions provided by the embodiments of the present disclosure are also applicable to similar technical problems.

In the present disclosure, for the case of performing joint transmission by multiple TRPs, since the locations of the multiple TRPs may be different, that is, propagation distances and directions of the multiple TRPs to the terminal may be different, thus a method for indicating a transmission configuration indication (TCI) state is proposed for the case where the transmission parameters of the TRPs at on the terminal side may be different. The network device indicates at least one TCI state and/or at least one pair of TCI states to the terminal, so that the terminal clearly knows a mapping relationship between each TCI state and a DMRS port or a CDM group. That is, the terminal knows which DMRS ports and reference signals indicated by which TCI state are in a quasi co-location relationship, thereby improving the transmission performance of coherent joint transmission based on multiple TRPs.

It should be noted that in the present disclosure, a method for indicating a transmission configuration indication state provided in any embodiment can be performed alone, or in combination with possible implementations in other embodiments, or in combination with any technical solution in the related art.

The embodiments of the present disclosure will now be further described with reference to the accompanying drawings and specific implementations.

Exemplary embodiments will be described in detail herein, examples of which are illustrated in the accompanying drawings. When the following description refers to the drawings, the same numbers in different drawings refer to the same or similar elements unless otherwise indicated. The implementations described in the following embodiments do not represent all implementations consistent with embodiments of the present disclosure. Rather, they are merely examples of apparatus and methods consistent with aspects of the disclosure as detailed in the appended claims.

The terminology used in the embodiments of the present disclosure is for the purpose of describing particular embodiments only and is not intended to limit the embodiments of the present disclosure. As used in the embodiments of the present disclosure and the appended claims, the singular forms "a", "an" and "the" are intended to include the plural forms as well, unless the context clearly dictates otherwise. It will also be understood that the term "and/or" as used herein refers to and includes any and all possible combinations of one or more of the associated listed items.

Depending on the context, the words "if" and "in response to" as used herein may be interpreted as "when" or "while" or "in response to determining."

Embodiments of the present disclosure are described in detail below, examples of which are illustrated in the accompanying drawings, wherein the same or similar reference numerals refer to the same or similar elements throughout. The embodiments described below with reference to the accompanying drawings are exemplary and intended to explain the present disclosure, and are not to be construed as limitations of the present disclosure.

With reference to FIG. 2, FIG. 2 is a flowchart of a method for indicating a transmission configuration indication state provided by an embodiment of the present disclosure. The method is performed by a terminal. As shown in FIG. 2, the method may include but is not limited to the following steps.

Step 201, first indication information sent by a network device is received, the first indication information is configured to indicate at least one TCI state and/or at least one pair of TCI states for joint transmission.

Optionally, the joint transmission may be a coherent joint transmission (CJT) implemented by multiple TRPs.

Optionally, the first indication information may include a first medium access control (MAC) control element (CE). The first MAC CE is used to activate at least one TCI state and/or at least one pair of TCI states corresponding to a codepoint in a TCI field in downlink control information (DCI).

A TCI state can be a joint TCI state, a downlink (DL) TCI state, or an uplink (UL) TCI state. A pair of TCI states represents a DL TCI state and an UL TCI state. One code point in the TCI field in the DCI can correspond to multiple TCI states, or one code point in the TCI field in the DCI can correspond to multiple pairs of TCI states, or one code point in the TCI field in the DCI can correspond to one TCI state and one pair of TCI states, or one code point in the TCI field in the DCI can correspond to multiple TCI states and multiple pairs of TCI states, or one code point in the TCI field in the DCI can correspond to one TCI state and multiple pairs of TCI states, or one code point in the TCI field in the DCI can correspond to multiple TCI states and one pair of TCI states, which is not limited in the present disclosure.

Or, the first indication information may include a second MAC CE and downlink control information (DCI). The second MAC CE is used to activate at least one TCI state and/or at least one pair of TCI states corresponding to each of multiple code points of the TCI field in the DCI. The DCI is used to indicate one code point in the multiple code points.

That is, the network device can first activate the at least one TCI state and/or at least one pair of TCI states corresponding to multiple code points through the second MAC CE, and then one of the multiple code points is indicated through the DCI, so that the terminal can determine a TCI state corresponding to each DMRS port or CDM group based on the at least one TCI state and/or at least one pair of TCI states corresponding to the indicated code point. That is, it is clear which DMRS ports are in a quasi co-location relationship with a reference signal indicated by which TCI state or which pair of TCI states.

In the present disclosure, the terminal can receive the at least one TCI state and/or at least one pair of TCI states for joint transmission sent by the network device, and then determine, for each DMRS port in the joint transmission, a first reference signal indicated by which TCI state or which pair of TCI states is in a quasi co-location relationship with the DMRS port, so that the joint transmission based on multiple TRPs can be reliably realized, which improves the transmission performance of CJT based on multiple TRPs.

With reference to FIG. 3, FIG. 3 is a flowchart of a method for indicating a transmission configuration indication state provided by an embodiment of the present disclosure. The method is performed by a terminal. As shown in FIG. 3, the method may include but is not limited to the following steps.

Step 301, first indication information sent by a network device is received, the first indication information is configured to indicate at least one TCI state and/or at least one pair of TCI states for joint transmission.

For the specific implementation of the above step 301, reference may be made to the detailed description of any embodiment of the present disclosure, and will not be described again here.

Step 302, a transmission parameter of the joint transmission is determined according to a first reference signal respectively indicated by the at least one TCI state and/or at least one pair of TCI states.

Optionally, the first reference signal may be a channel state information reference signal (CSI-RS). The CSI-RS may be a CSI-RS configured as a tracking reference signal (TRS), or a CSI-RS configured with repetitions, or a CSI-RS that is not configured as a TRS or configured with a repetition. The terminal may determine the first reference signal indicated by each or each pair of TCI states according to the CSI-RS identifier in each or each pair of TCI states. Then, according to the mapping relationship between the TCI state and the DMRS port, the first reference signal that has a quasi-co-location relationship with each DMRS port is determined, and then the transmission parameter corresponding to each DMRS port, i.e., the transmission parameter of the joint transmission, can be determined based on the transmission parameter corresponding to the first reference signal.

Optionally, the transmission parameter includes at least one of: an average delay, a delay spread, a Doppler shift, a Doppler spread, and a spatial reception parameter (spatial Rx parameter).

The space reception parameter is a quasi-co-location parameter of type D (QCL-TypeD).

A QCL type A includes the following transmission parameters: a Doppler shift, a Doppler spread, an average delay, a delay spread. A QCL type B includes the following transmission parameters: a Doppler shift, a Doppler spread. A QCL type C includes the following transmission parameters: a Doppler shift, an average delay. A QCL type D includes the following transmission parameter: a spatial Rx parameter.

Optionally, the terminal may determine a transmission parameter of a DMRS port of a physical downlink shared channel (PDSCH) according to a first reference signal respectively indicated by a joint TCI state or a downlink TCI state in the at least one TCI state and/or at least one pair of TCI states.

That is to say, the terminal can assume that a DMRS port of a PDSCH of each TRP is in a quasi-co-location relationship with a downlink reference signal (DL RS) or an uplink reference signal (UL RS) indicated by a corresponding TCI state.

Or, the terminal may determine a transmission parameter of a DMRS port of a physical uplink shared channel (PUSCH) based on a first reference signal respectively indicated by a joint TCI state or an uplink TCI state in the at least one TCI state and/or at least one pair of TCI states.

That is to say, the terminal can assume that all DMRS ports of a PUSCH of each TRP are in a quasi-co-location relationship with a DL RS or an UL RS indicated by the TCI state.

In the present disclosure, after the terminal receives the at least one TCI state and/or at least one pair of TCI states for joint transmission sent by the network device, it can determine the TCI state corresponding to each DMRS port of joint transmission according to the first reference signal respectively indicated by the at least one TCI state and/or at least one pair of TCI states, and then determine the transmission parameter of the joint transmission, thereby reliably realizing coherent joint transmission based on multiple TRPs and improving the transmission performance of CJT based on multiple TRPs.

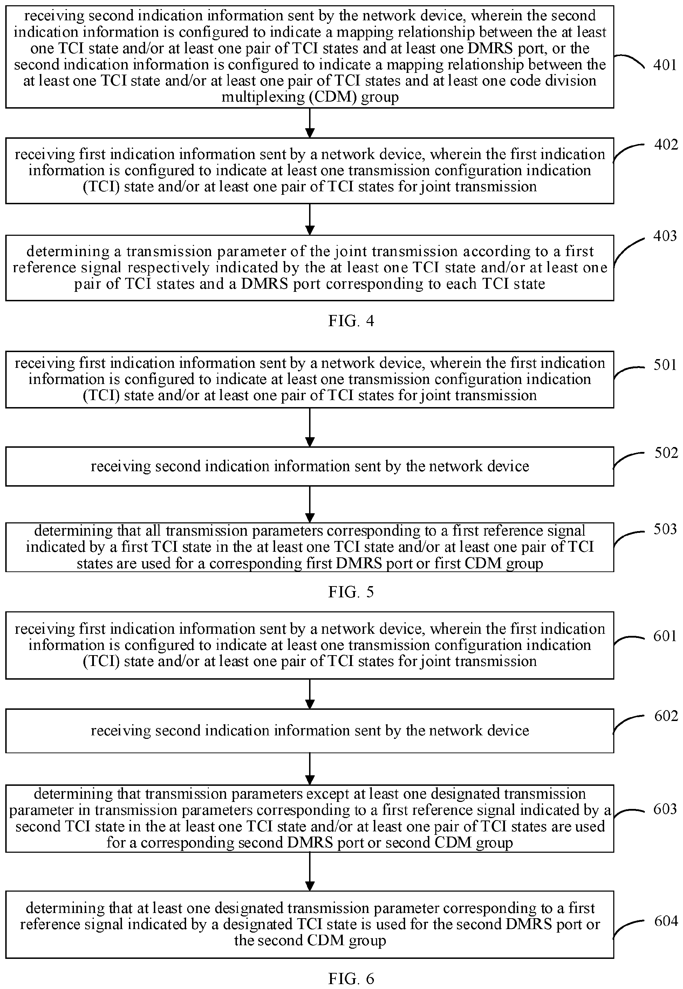

With reference to FIG. 4, FIG. 4 is a flowchart of a method for indicating a transmission configuration indication state provided by an embodiment of the present disclosure. The method is performed by a terminal. As shown in FIG. 4, the method may include but is not limited to the following steps.

Step 401, second indication information sent by a network device is received, the second indication information can be used to indicate a mapping relationship between at least one TCI state and/or at least one pair of TCI states and at least one DMRS port respectively, or, the second indication information is used to indicate a mapping relationship between the at least one TCI state and/or at least one pair of TCI states and at least one CDM group respectively.

Optionally, if the second indication information indicates the mapping relationship between TCI states and CDM groups, DMRS ports belonging to one CDM group correspond to the same TCI state.

Optionally, one TCI state can correspond to at least one DMRS port, and numbers of DMRS ports corresponding to different TCI states can be the same or different. For example, some correspond to one DMRS port, and some correspond to two DMRS ports. The present disclosure does not limit this.

For example, the second indication information indicates a mapping relationship between at least one DMRS port and each of two TCI states, respectively. For example, the second indication information indicates that, joint TCI state 1 corresponds to DMRS port 0, joint TCI state 2 corresponds to DMRS port 1; or joint TCI state 1 corresponds to DMRS port 0 and DMRS port 1, and joint TCI state 2 corresponds to DMRS port 2.

Or, the second indication information indicates a mapping relationship between at least one DMRS port and each pair of two pairs of TCI states, respectively. For example, the second indication information indicates that: one pair of TCI states (DL TCI state 1 and UL TCI state 1) corresponds to DMRS port 1, and the other pair of TCI states (DL TCI state 2 and UL TCI state 2) corresponds to DMRS port 2.

Or, the second indication information indicates a mapping relationship between at least one DMRS port and each of one TCI state and one pair of TCI states, respectively. For example, the second indication information indicates that joint TCI state 1 corresponds to DMRS port 1, DL TCI state 2 and UL TCI state 2 together corresponds to DMRS port 2.

Or, the second indication information indicates a mapping relationship between one CDM group and each of two TCI states, respectively. Each CDM group includes at least one DMRS port. Numbers of DMRS ports included in different CDM groups may be the same or different. For example, the second indication information indicates that, joint TCI state 1 corresponds to CDM group 1, and joint TCI state 2 corresponds to CDM group 2. CDM group 1 includes DMRS port 0, CDM group 2 includes DMRS port 2. Or, CDM group 1 includes DMRS port 0 and DMRS port 1, CDM group 2 includes DMRS port 2. Or, CDM group 1 includes DMRS port 0 and DMRS port 1, CDM group 2 includes DMRS port 2 and DMRS port 3, etc. This is not limited here.

Or, the second indication information indicates a mapping relationship between one CDM group and each pair of two pairs of TCI states, respectively. Each CDM group includes at least one DMRS port, and numbers of DMRS ports included in different CDM groups may be the same or different. For example, the second indication information indicates that, one pair of TCI states (DL TCI state 1 and UL TCI state 1) corresponds to CDM group 1, and the other pair of TCI states (DL TCI state 2 and UL TCI state 2) corresponds to CDM Group 2. CDM group 1 includes DMRS port 0, and CDM group 2 includes DMRS port 2; or, CDM group 1 includes DMRS port 0 and DMRS port 1, and CDM group 2 includes DMRS port 2; or, CDM group 1 includes DMRS port 0 and DMRS port 1, CDM group 2 includes DMRS port 2 and DMRS port 3, etc. This is not limited here.

Or, the second indication information indicates a mapping relationship between one CDM group and each of one TCI state and one pair of TCI states, respectively. The number of DMRS ports included in the CDM group is at least one, and numbers of DMRS ports included in different CDM groups can be the same or different. For example, the second indication information indicates that, joint TCI state 1 corresponds to CDM group 1, and a pair of TCI states (DL TCI state 2 and UL TCI state 2) corresponds to CDM group 2. CDM group 1 includes DMRS port 0, CDM group 2 includes DMRS port 2; or, CDM group 1 includes DMRS port 0 and DMRS port 1, CDM group 2 includes DMRS port 2; or, CDM group 1 includes DMRS port 0 and DMRS port 1, CDM group 2 includes DMRS port 2 and DMRS port 3, etc. This is not limited here.

Or, the second indication information indicates a mapping relationship between at least one DMRS port and each of four TCI states, respectively. For example, the second indication information indicates that, joint TCI state 1 corresponds to DMRS port 0, joint TCI state 2 corresponds to DMRS port 1, joint TCI state 3 corresponds to DMRS port 2, and joint TCI state 4 corresponds to DMRS port 3.

Or, the second indication information indicates a mapping relationship between at least one DMRS port and each pair of four pairs of TCI states, respectively. For example, the second indication information indicates that, a pair of TCI states (DL TCI state 1 and UL TCI state 1) corresponds to DMRS port 0; a pair of TCI states (DL TCI state 2 and UL TCI state 2) corresponds to DMRS port 1; a pair of TCI states (DL TCI state 3 and UL TCI state 3) corresponds to DMRS port 2; and a pair of TCI states (DL TCI state 4 and UL TCI state 4) corresponds to DMRS port 3.

Or, the second indication information indicates a mapping relationship between at least one DMRS port and each of two TCI states and two pairs of TCI states, respectively. For example, the second indication information indicates that, joint TCI state 1 corresponds to DMRS port 0, joint TCI state 2 corresponds to DMRS port 1, one pair of TCI states (DL TCI state 3 and UL TCI state 3) corresponds to DMRS port 2, and the other pair of TCI states (DL TCI state 4 and UL TCI state 4) correspond to DMRS port 3.

Or, the second indication information indicates a mapping relationship between one CDM group and each of three TCI states, respectively. Each CDM group includes at least one DMRS port, and numbers of DMRS ports included in different CDM groups may be the same or different. For example, the second indication information indicates that, joint TCI state 1 corresponds to CDM group 1, joint TCI state 2 corresponds to CDM group 2, and joint TCI state 3 corresponds to CDM group 3. CDM group 1 includes DMRS port 0, CDM group 2 includes DMRS port 2, and CDM group 3 includes DMRS port 4; or CDM group 1 includes DMRS port 0 and DMRS port 1, CDM group 2 includes DMRS port 2, and CDM group 3 includes DMRS port 4; or, CDM group 1 includes DMRS port 0 and DMRS port 1, CDM group 2 includes DMRS port 2 and DMRS port 3, CDM group 3 includes DMRS port 4; or, CDM group 1 includes DMRS port 0 and DMRS port 1, CDM group 2 includes DMRS port 2 and DMRS port 3, CDM group 3 includes DMRS port 4 and DMRS port 5, etc. This is not limited here.

Or, the second indication information indicates a mapping relationship between one CDM group and each of three pairs of TCI states, respectively. A number of DMRS ports in each CDM group is at least one, and numbers of DMRS ports of different CDM groups may be the same or different. For example, the second indication information indicates that, one pair of TCI states (DL TCI state 1 and UL TCI state 1) corresponds to CDM group 1, one pair of TCI states (DL TCI state 2 and UL TCI state 2) corresponds to CDM group 2, and one pair of TCI states (DL TCI state 3 and UL TCI state 3) corresponds to CDM group 3. CDM group 1 includes DMRS port 0, CDM group 2 includes DMRS port 2, and CDM group 3 includes DMRS port 4; or CDM group 1 includes DMRS port 0 and DMRS port 1, CDM group 2 includes DMRS port 2, and CDM group 3 includes DMRS port 4; or, CDM group 1 includes DMRS port 0 and DMRS port 1, CDM group 2 includes DMRS port 2 and DMRS port 3, CDM group 3 includes DMRS port 4; or, CDM group 1 includes DMRS port 0 and DMRS port 1, CDM group 2 includes DMRS port 2 and DMRS port 3, CDM group 3 includes DMRS port 4 and DMRS port 5, etc. This is not limited here.

Or, the second indication information indicates a mapping relationship between a CDM group and each of one TCI state and two pairs of TCI states, respectively. Each CDM group includes at least one DMRS port, and numbers of DMRS port included in each CDM group can be the same or different. For example, the second indication information indicates that, joint TCI state 1 corresponds to CDM group 1, one pair of TCI states (DL TCI state 2 and UL TCI state 2) corresponds to CDM group 2, and one pair of TCI states (DL TCI state 3 and UL TCI state 3) correspond to CDM group 3. CDM group 1 includes DMRS port 0, CDM group 2 includes DMRS port 2, and CDM group 3 includes DMRS port 4; or CDM group 1 includes DMRS port 0 and DMRS port 1, CDM group 2 includes DMRS port 2, and CDM group 3 includes DMRS port 3 and DMRS port 4; or, CDM group 1 includes DMRS port 0 and DMRS port 1, CDM group 2 includes DMRS port 2 and DMRS port 3, and CDM group 3 includes DMRS port 4; or, CDM group 1 includes DMRS port 0 and DMRS port 1, CDM group 2 includes DMRS port 2 and DMRS port 3, and CDM group 3 includes DMRS port 4 and DMRS port 5, etc. This is not limited here.

It should be noted that in the present disclosure, the mapping relationship between a TCI state or a pair of TCI states and a CDM group, and the corresponding relationship between a CDM group and a DMRS port are all illustrative descriptions and cannot be constructed as a limited description to the technical solution of the present disclosure.

Optionally, in the present disclosure, the terminal may determine, according to a default mapping relationship, a mapping relationship between the at least one TCI state and/or at least one pair of TCI states and at least one DMRS port, or a mapping relationship between the at least one TCI state and/or at least one pair of TCI states and at least one CDM group.

The default mapping relationship may be agreed upon by the protocol.

Optionally, in the default mapping relationship, different DMRS ports can correspond to different TCI states. Or, different CDM groups correspond to different TCI states (DMRS ports belonging to one CDM group correspond to the same TCI state). Or, the default mapping relationship specifies which DMRS ports correspond to the same TCI state.

Optionally, the default mapping relationship can support that one TCI state corresponds to at least one DMRS port. The numbers of DMRS ports corresponding to different TCI states can be the same or different. For example, some TCI states correspond to one DMRS port and some TCI states correspond to two DMRS ports. The disclosure does not limit this.

For example, the default mapping relationship indicates a mapping relationship between two TCI states and at least one DMRS port respectively. For example, the second indication information indicates that, joint TCI state 1 corresponds to DMRS port 0, and joint TCI state 2 corresponds to DMRS port 1; or joint TCI state 1 corresponds to DMRS port 0 and DMRS port 1, and joint TCI state 2 corresponds to DMRS port 2. Or, the default mapping relationship indicates a mapping relationship between two pairs of TCI states, respectively, and at least one DMRS port. For example, the second indication information indicates that, one pair of TCI states (DL TCI state 1 and UL TCI state 1) corresponds to DMRS port 1, and the other pair of TCI states (DL TCI state 2 and UL TCI state 2) corresponds to DMRS port 2.

Or, the default mapping relationship indicates a mapping relationship between one TCI state and one pair of TCI states, respectively, and at least one DMRS port. For example, the second indication information indicates that joint TCI state 1 corresponds to DMRS port 1, DL TCI state 2 and UL TCI state 2 correspond to DMRS port 2.

Or, the default mapping relationship indicates a mapping relationship between two TCI states, respectively, and a CDM group. Each CDM group includes at least one DMRS port, and the numbers of DMRS ports included in different CDM groups can be the same or different. For example, the second indication information indicates that joint TCI state 1 corresponds to CDM group 1, and joint TCI state 2 corresponds to CDM group 2. CDM group 1 includes DMRS port 0, and CDM group 2 includes DMRS port 2; or, CDM group 1 includes DMRS port 0 and DMRS port 1, and CDM group 2 includes DMRS port 2; or, CDM group 1 includes DMRS port 0 and DMRS port 1, and CDM group 2 includes DMRS port 2 and DMRS port 3, etc. This is not limited here.

Or, the default mapping relationship indicates a mapping relationship between two pairs of TCI states, respectively, and a CDM group. Each CDM group includes at least one DMRS port, and the numbers of DMRS ports included in different CDM groups can be the same or different. For example, the second indication information indicates that, one pair of TCI states (DL TCI state 1 and UL TCI state 1) corresponds to CDM group 1, and the other pair of TCI states (DL TCI state 2 and UL TCI state 2) corresponds to CDM Group 2. CDM group 1 includes DMRS port 0, and CDM group 2 includes DMRS port 2; or, CDM group 1 includes DMRS port 0 and DMRS port 1, and CDM group 2 includes DMRS port 2; or, CDM group 1 includes DMRS port 0 and DMRS port 1, and CDM group 2 includes DMRS port 2 and DMRS port 3, etc. This is not limited here.

Or, the default mapping relationship indicates a mapping relationship between a TCI state and a pair of TCI states, respectively, and a CDM group. Each CDM group includes at least one DMRS port, and the numbers of DMRS ports included in different CDM groups can be the same or different. For example, the second indication information indicates that, joint TCI state 1 corresponds to CDM group 1, and the pair of TCI states (DL TCI state 2 and UL TCI state 2) corresponds to CDM group 2. CDM group 1 includes DMRS port 0, and CDM group 2 includes DMRS port 2; or, CDM group 1 includes DMRS port 0 and DMRS port 1, and CDM group 2 includes DMRS port 2; or, CDM group 1 includes DMRS port 0 and DMRS port 1, and CDM group 2 includes DMRS port 2 and DMRS port 3, etc. This is not limited here.

Or, the default mapping relationship indicates a mapping relationship between four TCI states and at least one DMRS port respectively. For example, the second indication information indicates that joint TCI state 1 corresponds to DMRS port 0, joint TCI state 2 corresponds to DMRS port 1, joint TCI state 3 corresponds to DMRS port 2, and joint TCI state 4 corresponds to DMRS port 3.

Or, the default mapping relationship indicates a mapping relationship between at least one DMRS port and four pairs of TCI states, respectively. For example, the second indication information indicates that: one pair of TCI states (DL TCI state 1 and UL TCI state 1) corresponds to DMRS port 0; one pair of TCI states (DL TCI state 2 and UL TCI state 2) corresponds to DMRS port 1; one pair of TCI states (DL TCI state 3 and UL TCI state 3) corresponds to DMRS port 2; one pair of TCI states (DL TCI state 4 and UL TCI state 4) corresponds to DMRS port 3.

Or, the default mapping relationship indicates a mapping relationship between at least one DMRS port and two TCI states and two pairs of TCI states, respectively. For example, the second indication information indicates that, joint TCI state 1 corresponds to DMRS port 0, joint TCI state 2 corresponds to DMRS port 1, one pair of TCI states (DL TCI state 3 and UL TCI state 3) corresponds to DMRS port 2, and one pair of TCI states (DL TCI state 4 and UL TCI state 4), corresponds to DMRS port 3.

Or, the default mapping relationship indicates a mapping relationship between a CDM group and 3 TCI states respectively. Each CDM group includes at least one DMRS port, and the numbers of DMRS ports included in different CDM groups can be the same or different. For example, the second indication information indicates that joint TCI state 1 corresponds to CDM group 1, joint TCI state 2 corresponds to CDM group 2, and joint TCI state 3 corresponds to CDM group 3. CDM group 1 includes DMRS port 0, CDM group 2 includes DMRS port 2, and CDM group 3 includes DMRS port 4; or CDM group 1 includes DMRS port 0 and DMRS port 1, CDM group 2 includes DMRS port 2, and CDM group 3 includes DMRS port 4; or, CDM group 1 includes DMRS port 0 and DMRS port 1, CDM group 2 includes DMRS port 2 and DMRS port 3, and CDM group 3 includes DMRS port 4; or, CDM group 1 includes DMRS port 0 and DMRS port 1, CDM group 2 includes DMRS port 2 and DMRS port 3, and CDM group 3 includes DMRS port 4 and DMRS port 5, etc. This is not limited here.

Or, the default mapping relationship indicates a mapping relationship between a CDM group and 3 pairs of TCI states, respectively. Each CDM group includes at least one DMRS port, and the numbers of DMRS ports included in different CDM groups can be the same or different. For example, the second indication information indicates that: one pair of TCI states (DL TCI state 1 and UL TCI state 1) corresponds to CDM group 1, one pair of TCI states (DL TCI state 2 and UL TCI state 2) corresponds to CDM group 2, and one pair of TCI states (DL TCI state 3 and UL TCI state 3) correspond to CDM group 3. CDM group 1 includes DMRS port 0, CDM group 2 includes DMRS port 2, and CDM group 3 includes DMRS port 4; or CDM group 1 includes DMRS port 0 and DMRS port 1, CDM group 2 includes DMRS port 2, and CDM group 3 includes DMRS port 4; or, CDM group 1 includes DMRS port 0 and DMRS port 1, CDM group 2 includes DMRS port 2 and DMRS port 3, and CDM group 3 includes DMRS port 4; or, CDM group 1 includes DMRS port 0 and DMRS port 1, CDM group 2 includes DMRS port 2 and DMRS port 3, and CDM group 3 includes DMRS port 4 and DMRS port 5, etc. This is not limited here.

Or, the default mapping relationship indicates a mapping relationship between a CDM group and 1 TCI state and 2 pairs of TCI states, respectively. Each CDM group includes at least one DMRS port, and the numbers of DMRS ports included in different CDM groups can be the same or different. For example, the second indication information indicates that, joint TCI state 1 corresponds to CDM group 1, one pair of TCI states (DL TCI state 2 and UL TCI state 2) corresponds to CDM group 2, and one pair of TCI states (DL TCI state 3 and UL TCI state 3) corresponds to CDM group 3. CDM group 1 includes DMRS port 0, CDM group 2 includes DMRS port 2, and CDM group 3 includes DMRS port 4; or CDM group 1 includes DMRS port 0 and DMRS port 1, CDM group 2 includes DMRS port 2, and CDM group 3 includes DMRS port 4; or, CDM group 1 includes DMRS port 0 and DMRS port 1, CDM group 2 includes DMRS port 2 and DMRS port 3, and CDM group 3 includes DMRS port 4; or, CDM group 1 includes DMRS port 0 and DMRS port 1, CDM group 2 includes DMRS port 2 and DMRS port 3, and CDM group 3 includes DMRS port 4 and DMRS port 5, etc. This is not limited here.

It should be noted that in the present disclosure, the mapping relationship between a CDM group and a TCI state or a pair of TCI states, and the corresponding relationship between a CDM group and a DMRS port are all illustrative descriptions and cannot be used as a limitation to the technical solution of the present disclosure.

Step 402, first indication information sent by the network device is determined, the first indication information is used to indicate at least one TCI state and/or at least one pair of TCI states for joint transmission.

Steps 401 and 402 can be performed at the same time. That is, the second indication information and the first indication information are indicated through one indication message. Or step 402 can be performed first, and then step 401 is performed. This disclosure does not limit this.

Step 403, a transmission parameter of the joint transmission is determined according to a first reference signal respectively indicated by the at least one TCI state and/or at least one pair of TCI states and a DMRS port corresponding to each TCI state.

For the specific implementation of the above steps 402 and 403, reference can be made to the detailed description of any embodiment of the present disclosure, which will not be described again here.

In the present disclosure, after receiving at least one TCI state and/or at least one pair of TCI states for joint transmission indicated by the network device, the terminal can determines the first reference signal that has a quasi-co-location relationship with each DMRS port in the joint transmission according to the transmission parameter corresponding to the first reference signal indicated by each TCI state and the DMRS port corresponding to each TCI state, and then the transmission parameters of the joint transmission are determined. Thus, coherent joint transmission based on multiple TRPs is reliably realized, and the transmission performance of CJT based on multiple TRPs is improved.

With reference to FIG. 5, FIG. 5 is a flowchart of a method for indicating a transmission configuration indication state provided by an embodiment of the present disclosure. The method is performed by a remote terminal. As shown in FIG. 5, the method may include but is not limited to the following steps.

Step 501, first indication information sent by a network device is received, the first indication information is used to indicate at least one TCI state and/or at least one pair of TCI states for joint transmission.

Step 502, second indication information sent by the network device is received.

The second indication information may be used to indicate a mapping relationship between at least one TCI state and/or at least one pair of TCI states and at least one DMRS port respectively. Alternatively, the second indication information is used to indicate a mapping relationship between at least one TCI state and/or at least one pair of TCI states and at least one CDM group.

For the specific implementation form of the above step 501 and step 502, reference can be made to the detailed description of any embodiment of the present disclosure, and will not be described again here.

Step 503, it is determined that all transmission parameters corresponding to a first reference signal indicated by a first TCI state in at least one TCI state and/or at least one pair of TCI states are used for a corresponding first DMRS port or first CDM group.

For example, if the second indication information indicates the mapping relationship between the first TCI state and the first DMRS port (or the first CDM group), or the mapping relationship between the first TCI state and the first DMRS port (or the first CDM group) is determined according to a default mapping relationship, the terminal can determine that all transmission parameters corresponding to the first reference signal indicated by the first TCI state can be used for the first DMRS port (or each DMRS port in the first CDM group).

For example, a QCL type indicated by the first TCI state includes QCL Type A. All transmission parameters included in the QCL Type A include an average delay, a delay spread, a Doppler shift, and a Doppler spread. That is, all these four parameters can be used for the first DMRS port (or each DMRS port in the first CDM group). Or, the QCL type indicated by the first TCI state includes a QCL Type B, and all transmission parameters included in the QCL Type B are a Doppler shift and a Doppler spread. That is, both parameters can be used for the first DMRS port (or each DMRS port in the first CDM group). Or, the QCL type indicated by the first TCI state includes a QCL Type C, and all transmission parameters included in the QCL type C are a Doppler shift and an average delay. That is, both parameters can be used for the first DMRS port (or each DMRS port in the first CDM group), etc. This disclosure does not limit this.

In the present disclosure, after receiving the at least one TCI state and/or at least one pair of TCI states for joint transmission indicated by the network device and the DMRS port mapped to each TCI state, the terminal can determine that the transmission parameter corresponding to the first reference signal indicated by each TCI state can be used for the corresponding DMRS port. Thus, coherent joint transmission based on multiple TRPs is reliably realized, and the transmission performance of CJT based on multiple TRPs is improved.

With reference to FIG. 6, FIG. 6 is a flowchart of a method for indicating a transmission configuration indication state provided by an embodiment of the present disclosure. The method is performed by a remote terminal. As shown in FIG. 6, the method may include but is not limited to the following steps.

Step 601, first indication information sent by a network device is received, the first indication information is used to indicate at least one TCI state and/or at least one pair of TCI states for joint transmission.

Step 602, second indication information sent by the network device is received.

The second indication information may be used to indicate a mapping relationship between the at least one TCI state and/or at least one pair of TCI states and at least one DMRS port respectively. Or, the second indication information is used to indicate a mapping relationship between the at least one TCI state and/or at least one pair of TCI states and at least one CDM group respectively.

For the specific implementation of the above step 601 and step 602, reference can be made to the detailed description of any embodiment of the present disclosure, and will not be described again here.

Step 603, it is determined that transmission parameters except at least one designated transmission parameter in transmission parameters corresponding to a first reference signal indicated by a second TCI state in the at least one TCI state and/or at least one pair of TCI states are used for a corresponding second DMRS port or second CDM group.

Step 604, it is determined that at least one designated transmission parameter corresponding to a first reference signal indicated by a designated TCI state is used for the second DMRS port or the second CDM group.

The designated transmission parameter may be any one or more of the transmission parameters corresponding to the joint transmission or the first reference signal. It may be indicated by the network device, or may be agreed upon in the protocol, and the disclosure does not limit this.

Optionally, the Doppler shift and the Doppler spread can be compensated to be the same as other TRPs after being compensated by network device, but the average delay, the delay spread and the spatial Rx parameter are not easy to compensate if the TRP positions are different. Therefore, in the present disclosure, the designated transmission parameter may be at least one of the Doppler shift and the Doppler spread.

Optionally, the designated TCI state can be indicated by the network device; or it can be determined by the terminal itself. For example, the designated TCI state can be a TCI state with a minimum TCI state identifier, a low bit of a MAC CE, or a first TCI state indicated by the first indication information, etc. The disclosure does not limit this.

For example, if the second indication information indicates a mapping relationship between the second TCI state and the second DMRS port (or the second CDM group), or a mapping relationship between the first TCI state and the second DMRS port (or the second CDM group) is determined based on the default mapping relationship, the terminal can determine the transmission parameters except the Doppler shift and/or the Doppler spread corresponding to the first reference signal indicated by the second TCI state to be used for the second DMRS port (or each DMRS port in the second CDM group), and the Doppler shift and/or Doppler spread corresponding to the first reference signal indicated by the designated TCI state is also used for the second DMRS port (or each DMRS port in the second CDM group).

It should be noted that when the second TCI state and the designated TCI state are not the same TCI state, the first reference signal indicated by the second TCI state and the first reference signal indicated by the designated TCI state are different. Thus, the Doppler shifts and/or Doppler spreads corresponding to the two are different.

In addition, if the second indication information indicates a mapping relationship between the designated TCI state and a third DMRS port (or a third CDM group), or the mapping relationship between the designated TCI state and the third DMRS port (or the third CDM group) is determined based on the default mapping relationship, it is directly determined that all transmission parameters corresponding to the first reference signal indicated by the designated TCI state are used for the third DMRS port (or each DMRS port in the third CDM group).

In the present disclosure, after receiving the at least one TCI state and/or at least one pair of TCI states for joint transmission indicated by the network device and the DMRS port mapped to each TCI state, the terminal can determine that the transmission parameters except the designated transmission parameter in the transmission parameters corresponding to the first reference signal indicated by each TCI state or the designated transmission parameter corresponding to the first reference signal indicated by the designated TCI state is used for the corresponding DMRS port. Thus, coherent joint transmission based on multiple TRPs is reliably realized and the transmission performance of CJT based on multiple TRPs is improved.

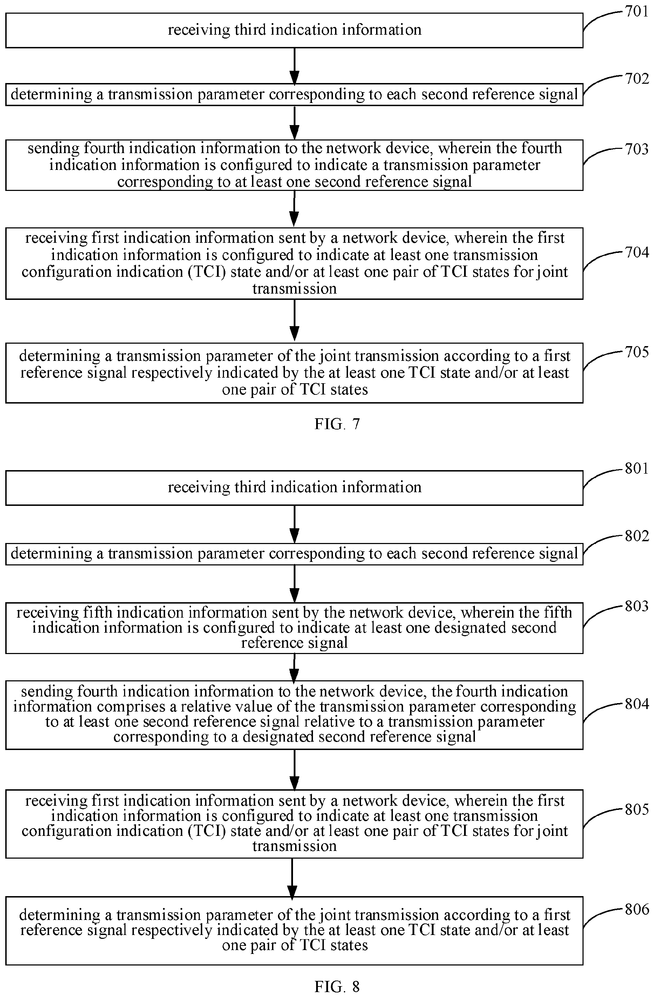

With reference to FIG. 7, FIG. 7 is a flowchart of a method for indicating a transmission configuration indication state provided by an embodiment of the present disclosure. The method is performed by a terminal. As shown in FIG. 7, the method may include but is not limited to the following steps.

Step 701, third indication information is received.

The third indication information is used to indicate a second reference signal corresponding to each channel measurement resource (CMR) or channel state information reference signal (CSI-RS) port group, or a second reference signal corresponding to each CMR group or CSI-RS port group set. One CMR group includes at least one CMR, and one CSI-RS port group set includes at least one CSI-RS port group.

The CMR corresponds to the TRP one-to-one, or the CSI-RS port group corresponds to the TRP one-to-one. For example, the number of CSI-RS ports is 32, there are 4 TRPs, and each TRP corresponds to 8 ports. The CMR is a CSI-RS resource used for channel measurement.

That is to say, if the third indication information indicates the second reference signal corresponding to each CMR or CSIRS port group, that is, the number of second reference signals indicated by the third indication information is the same as the number of CMRs or CSI-RS port groups, the second reference signal corresponding to each TRP is indicated. Or, if the third indication information indicates the second reference signal corresponding to each CMR group or CSIRS port group set, that is, the number of second reference signals indicated by the third indication information is less than the number of CMRs or CSI-RS port groups, the second reference signal corresponding to each TRP group is indicated. Each TRP group includes at least one TRP.

Step 702, a transmission parameter corresponding to each second reference signal is determined.

In the disclosure, after receiving the second reference signal corresponding to each CMR or CSI-RS port group indicated by the network device, the terminal can determine the transmission parameter corresponding to each second reference signal, for example, determine at least one of an average delay, a delay spread, a Doppler shift, a Doppler spread, etc. corresponding to each second reference signal.

Step 703, fourth indication information is sent to the network device, the fourth indication information is used to indicate a transmission parameter corresponding to at least one second reference signal.

Optionally, the fourth indication information may be indicated by a sounding reference signal (SRS). That is, the SRS is adjusted based on at least one transmission parameter and then sent. For example, a transmission delay of the SRS is set based on a value of the average delay of the second reference signal, and an impact of the Doppler parameter of the SRS is adjusted based on a value of at least one of the Doppler shift and the Doppler spread of the second reference signal before transmission. Each SRS corresponds to a transmission parameter indicating a second reference signal.

Optionally, the fourth indication information may also be included in channel state information (CSI). Thus, the transmission parameter corresponding to the at least one second reference signal is displayed and fed back to the network device. For example, the value of at least one of the average delay, delay spread, Doppler shift, or Doppler spread corresponding to the second reference signal is reported to the base station based on a CSI feedback framework. The CSI feedback framework includes reporting mechanisms such as a feedback precoding matrix indication (PMI), a rank indication (RI), a layer indication (LI), a channel quality indication (CQI), an L1 layer reference signal received power (RSRP), an L1 layer signal to interference and noise ratio (SINR), etc.

Optionally, the fourth indication information may include an absolute value of the transmission parameter corresponding to each second reference signal; or, the fourth indication information may include a relative value of the transmission parameter corresponding to at least one second reference signal relative to a transmission parameter corresponding to a designated second reference signal.

The designated second reference signal may be indicated by the network device to the terminal, or may be determined by the terminal and then reported to the network device. The disclosure does not limit this.

In the present disclosure, after the terminal sends the relative value of the transmission parameter corresponding to at least one second reference signal, or the absolute value of the transmission parameter corresponding to each second reference signal to the network device, the network device can determines the first reference signal of the transmission parameter for joint transmission that is to be indicated to the terminal according to the transmission parameter corresponding to each second reference signal.

Optionally, the network device may select a second reference signal based on at least one transmission parameter corresponding to each second reference signal, and determine the first reference signal in the TCI state to be indicated. For example, the network device may determine multiple second reference signals as first reference signals respectively. Or the network device may also determine a designated second reference signal among the multiple second reference signals as the first reference signal. The designated second reference signal may be determined by a base station or may be indicated by a terminal report, etc. The disclosure does not limit this.

In the present disclosure, the network device may determine the transmission parameter used by the terminal for joint transmission based on a relative relationship between the transmission parameters and corresponding second reference signals. That is, the terminal may report the transmission parameter corresponding to the designated second reference signal, or may not report the transmission parameter corresponding to the designated second reference signal. The disclosure does not limit this.

Step 704, first indication information sent by the network device is received, the first indication information is used to indicate at least one TCI state and/or at least one pair of TCI states for joint transmission.

Step 705, a transmission parameter of the joint transmission is determined according to the first reference signal respectively indicated by at least one TCI state and/or at least one pair of TCI states.

For the specific implementation of the above steps 704 and 705, reference may be made to the detailed description of any embodiment of the present disclosure, and will not be described again here.

In the present disclosure, after receiving the transmission parameter corresponding to at least one second reference signal reported by the terminal, the network device can indicate an identifier of the reference signal used for joint transmission to the terminal through at least one TCI state and/or at least one pair of TCI states, so that the terminal can determine a transmission parameter of the corresponding DMRS port based on the transmission parameter corresponding to the first reference signal indicated in the at least one TCI state and/or at least one pair of TCI states, and the corresponding relationship between the TCI state and the DMRS port.

That is to say, the terminal can assume that each DMRS port of a PDSCH is quasi-co-located with a DL RS or an UL RS indicated by a corresponding TCI state, and/or assume that each DMRS port of a PUSCH is quasi-co-located with a DL RS or an UL RS indicated by a corresponding TCI state.

It should be noted that, a QCL indicated by the TCI state includes at least one of type A, B, C, and D. All of the reference signals indicated by the QCL types A, B, C, and D may be a CSI-RS configured as a TRS. A reference signal indicated by QCL Type D may be a CSI-RS configured with repetitions, or a CSI-RS that is not configured as a TRS nor configured with a repetition. That is, the first reference signal here may only include the second reference signal. For example, the first reference signal is a CSI-RS configured as a TRS, and the second reference signal is also a CSI-RS configured as a TRS. The first reference signal may also include two different reference signals. For example, the first reference signal includes a CSI-RS configured as a TRS (i.e., the second reference signal), and a CSI-RS configured with repetitions or a CSI-RS that is not configured as TRS nor configured with a repetition.

In the present disclosure, the terminal first receives the third indication information sent by the network device, determines the transmission parameter corresponding to each second reference signal indicated by the third indication information, and then sends the transmission parameter corresponding to the at least one second reference signal to the network device, and then, when the at least one TCI state and/or at least one pair of TCI states sent by the network device for joint transmission are received, the transmission parameter of each DMRS port, i.e., the transmission parameter of the joint transmission, is determined according to the first reference signal indicated by the at least one TCI state and/or at least one pair of TCI states, and the mapping relationship between the TCI state and the DMRS port, thereby coherent joint transmission based on multiple TRPs is reliably realized, and the transmission performance of CJT based on multiple TRPs is improved.

With reference to FIG. 8, FIG. 8 is a flowchart of a method for indicating a transmission configuration indication state provided by an embodiment of the present disclosure. The method is performed by a terminal. As shown in FIG. 8, the method may include but is not limited to the following steps.

Step 801, third indication information is received.

The third indication information is used to indicate a second reference signal corresponding to each channel measurement resource (CMR) or channel state information reference signal (CSI-RS) port group, or a second reference signal corresponding to each CMR group or CSI-RS port group set. One CMR group includes at least one CMR, and one CSI-RS port group set includes at least one CSI-RS port group.

Step 802, a transmission parameter corresponding to each second reference signal is determined.

For the specific implementation of the above steps 801 and 802, reference may be made to the detailed description of any embodiment of the present disclosure, and will not be described again here.

Step 803, fifth indication information sent by a network device is received, the fifth indication information is used to indicate a designated second reference signal.

Optionally, the fifth indication information may indicate only one designated second reference signal, or may indicate a designated second reference signal in each second reference signal group. That is, the fifth indication information may be used to indicate at least one designated reference signal.

For example, there are a total of 4 second reference signals. The second reference signal is a CSI-RS configured as a TRS. The 4 second reference signals include 4 TRS resources or 4 TRS resource sets, corresponding to 4 TRPs respectively. A designated TRS is defined. A transmission parameter corresponding to the designated TRS may not be fed back or an absolute value may be fed back, so that the terminal can feed back the relative values of transmission parameters of the other three second reference signals relative to the transmission parameter corresponding to the designated TRS.

Or, there are a total of 4 TRS resources or 4 TRS sets, corresponding to 4 TRPs respectively. The 4 TRS can be divided into 2 groups, the first TRS and the second TRS are the first group, and the third TRS and the fourth TRS are the second group. Each group has a designated TRS. Similarly, transmission parameters corresponding to the designated TRSs may not be fed back or the absolute values may be fed back. For a TRS other than the designated TRS in a group, a relative value between its transmission parameter and a transmission parameters corresponding to the designated TRS in the same group may be fed back.

In the present disclosure, step 803 may also be performed before step 802. For example, step 803 and step 801 may be executed at the same time. The disclosure does not limit this.

Step 804, fourth indication information is sent to the network device, the fourth indication information includes a relative value of a transmission parameter corresponding to at least one second reference signal relative to a transmission parameter corresponding to the designated second reference signal.

In the disclosure, if the terminal receives the designated second reference signal indicated by the network device, when reporting the transmission parameter corresponding to the second reference signal, the terminal can report only the relative value of the transmission parameter corresponding to the remaining second reference signals relative to the transmission parameter corresponding to the designated second reference signal. Afterwards, the network device can determine a relationship between the transmission parameters corresponding to respective second reference signals, and then determine the first reference signal whose transmission parameter can be used by the terminal for the jointly transmission.

Step 805, first indication information sent by the network device is received, the first indication information is used to indicate at least one TCI state and/or at least one pair of TCI states for joint transmission.

Step 806, a transmission parameter of the joint transmission is determined according to the first reference signal respectively indicated by the at least one TCI state and/or at least one pair of TCI states.

For the specific implementation of the above steps 805 and 806, reference may be made to the detailed description of any embodiment of the present disclosure, and will not be described again here.

In the disclosure, the terminal first receives a plurality of second reference signals sent by the network device, determines the transmission parameter corresponding to each second reference signal, and then reports the relative values of the transmission parameters corresponding to the remaining second reference signals relative to the transmission parameter corresponding to the designated second reference signal are reported to the network device. Then, after receiving the at least one TCI state and/or at least one pair of TCI states for joint transmission sent by the network device, the transmission parameters of multiple DMRS ports in the joint transmission can be determined based on the first reference signal respectively indicated by the at least one TCI state and/or at least one pair of TCI states, thereby coherent joint transmission based on multiple TRPs is reliably realized, and the transmission performance of CJT based on multiple TRPs is improved.

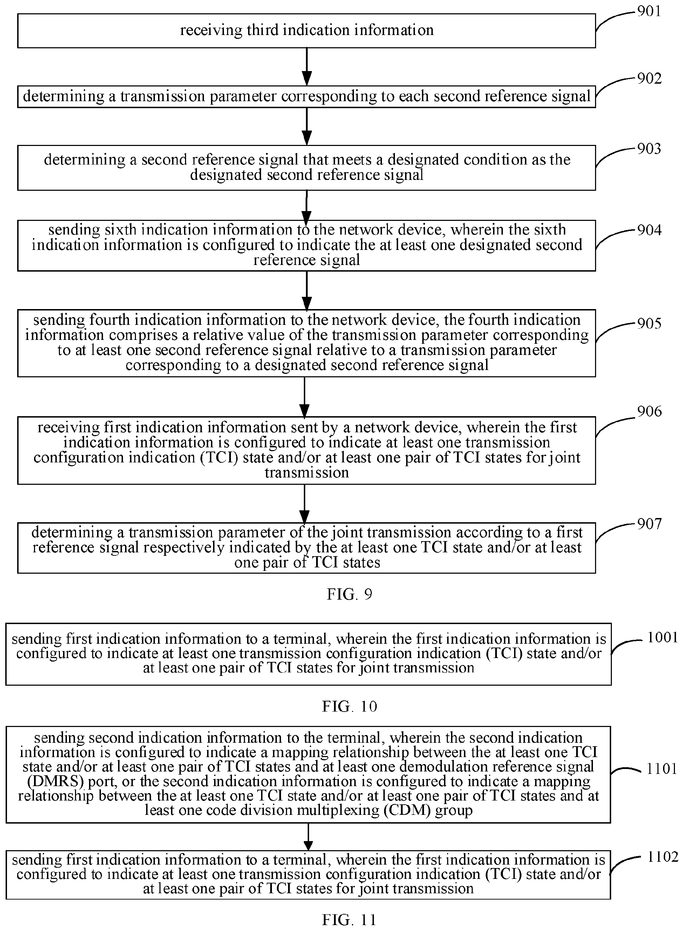

With reference to FIG. 9, FIG. 9 is a flowchart of a method for indicating a transmission configuration indication state provided by an embodiment of the present disclosure. The method is performed by a terminal. As shown in FIG. 9, the method may include but is not limited to the following steps.

Step 901, third indication information is received.

The third indication information is used to indicate a second reference signal corresponding to each channel measurement resource (CMR) or channel state information reference signal (CSI-RS) port group, or a second reference signal corresponding to each CMR group or CSI-RS port group set. One CMR group includes at least one CMR, and one CSI-RS port group set includes at least one CSI-RS port group.

Step 902, a transmission parameter corresponding to each second reference signal is determined.

For the specific implementation of the above steps 801 and 802, reference may be made to the detailed description of any embodiment of the present disclosure, and will not be described again here.

Step 903, a second reference signal that meets a designated condition is determined as the designated second reference signal.

Step 904: sixth indication information is sent to a network device, the sixth indication information is used to indicate at least one designated second reference signal.

Optionally, the terminal can determine the designated reference signal based on a delay corresponding to each reference signal.

For example, in response to a delay corresponding to a candidate second reference signal in multiple second reference signal being less than a delay corresponding to each of remaining second reference signals of the multiple second reference signal, it is determined that the candidate second reference signal meets the designated condition. The candidate second reference signal may be any one of the multiple second reference signals.

Or, if the network device further divides the multiple second reference signals into different groups, the terminal can also determine a second reference signal in each group that meet designated condition, that is, determine a designated second reference signal in each group. For example, in response to a delay corresponding to a candidate second reference signal in any second reference signal group being less than a delay corresponding to each of remaining second reference signals in the any reference signal group, it is determined that the candidate second reference signal in the any reference signal group meets the designated condition.

For example, there are a total of 4 TRS resources or 4 TRS resource sets, corresponding to 4 TRPs respectively. The 4 TRSs can be divided into 2 groups, the first TRS and the second TRS are the first group, and the third TRS and the fourth TRS are the second group. Therefore, the terminal can determine a designated reference signal in the first group and a designated reference signal in the second group. For example, if a delay corresponding to the first TRS in the first group is less than a delay corresponding to the second TRS, the first TRS can be determined to be the designated reference signal in the first group, so that when sending a transmission parameter to the network device, only a relative value of the transmission parameter corresponding to the second TRS relative to the transmission parameter corresponding to the first TRS is fed back. The method of feeding back a transmission parameter corresponding to a reference signal in the second group is similar to that of the first group and will not be described again here.

Or, if the network device does not divide the multiple second reference signals into different groups, the terminal may group the multiple second reference signals according to the delay. The terminal determines a second reference signal that meets the designated condition in each group, that is, determines a designated second reference signal in each group. For example, if a delay corresponding to a candidate second reference signal in any second reference signal group is less than a delay corresponding to each of the second reference signals other than the candidate second reference signal in the reference signal group, it is determined that the candidate second reference signal in the any reference signal group meets the designated condition.

For example, there are a total of 4 TRS resources or 4 TRS resource sets, corresponding to 4 TRPs respectively. The terminal first determines a delay corresponding to each TRS, and determines a TRS with a minimum delay as the first designated reference signal. A TRS whose delay difference with the first designated reference signal in TRSs other than the first designated reference signal less than a threshold value is grouped together with the first designated reference signal. If there are remaining TRSs whose delay difference from the delay of the first designated reference signal is greater than the threshold value, a TRS with a minimum delay in the remaining TRSs is determined to be a second designated reference signal, similarly, a TRS whose delay difference with the second designated reference signal is less than the threshold value is grouped together with the second designated reference signal, and so on. Thereby, the terminal determines at least one group and the designated reference signal corresponding to each group in the at least one group. When the terminal feeds back, it may feed back a relative value of a transmission parameter corresponding to each reference signal except designated reference signal relative to a transmission parameter corresponding to the designated reference signal, and a reference signal ID of the corresponding designated reference signal. Furthermore, a transmission parameter corresponding to the designated TRS may not be fed back or only the absolute value may be fed back. The threshold value may be indicated by a base station or agreed upon by a protocol.

After the terminal determines the designated reference signal, it can send the identifier of the designated reference signal to the network device.

Step 905, fourth indication information is sent to the network device, the fourth indication information includes a relative value of a transmission parameter corresponding to at least one second reference signal relative to a transmission parameter corresponding to the designated second reference signal.

Optionally, step 905 and step 904 may be performed at the same time. For example, the fourth indication information and the sixth indication information are included in the same information, which is not limited in this disclosure.

Step 906, first indication information sent by the network device is received, the first indication information is used to indicate at least one TCI state and/or at least one pair of TCI states for joint transmission.

Step 907, a transmission parameter of the joint transmission is determined according to the first reference signal of at least one TCI state and/or at least one pair of TCI states.

For the specific implementation of the above steps 905 to 907, reference can be made to the detailed description of any embodiment of the present disclosure, and will not be described again here.

In the disclosure, the terminal first receives the second reference signal corresponding to each CMR or CSI-RS port group sent by the network device, then it can determine the transmission parameter corresponding to each second reference signal, and determine the second reference signal that meets the designated condition as the designated second reference signal. The terminal sends the relative value of the transmission parameter corresponding to the at least one second reference signal relative to the transmission parameter corresponding to the designated second reference signal to the network device. After the terminal receives the at least one TCI state and/or at least one pair of TCI states for joint transmission sent by the network device, the terminal may determine the transmission parameter of each corresponding DMRS port in the joint transmission according to the first reference signal respectively indicated by the at least one TCI state and/or at least one pair of TCI states, thereby reliably realizing coherent joint transmission based on multiple TRPs and improving the transmission performance of CJT based on multiple TRPs.

With reference to FIG. 10, FIG. 10 is a flowchart of a method for indicating a transmission configuration indication state provided by an embodiment of the present disclosure. The method is performed by a network device. As shown in FIG. 10, the method may include but is not limited to the following steps.

Step 1001, first indication information is sent to a terminal, the first indication information is used to indicate at least one TCI state and/or at least one pair of TCI states for joint transmission.

Optionally, the joint transmission may be a coherent j oint transmission (CJT) implemented by multiple TRPs.

Optionally, the first indication information may include a first medium access control (MAC) control element (CE). The first MAC CE is used to activate at least one TCI state and/or at least one pair of TCI states corresponding to a codepoint in a TCI field in downlink control information (DCI), where the first MAC CE is used to activate the TCI domain in the DCI.

A TCI state can be a joint TCI state, a downlink (DL) TCI state, or an uplink (UL) TCI state. A pair of TCI states represents a DL TCI state and an UL TCI state. One code point in the TCI field in the DCI can correspond to multiple TCI states, or one code point in the TCI field in the DCI can correspond to multiple pairs of TCI states, or one code point in the TCI field in the DCI can correspond to one TCI state and one pair of TCI states, or one code point in the TCI field in the DCI can correspond to multiple TCI states and multiple pairs of TCI states, or one code point in the TCI field in the DCI can correspond to one TCI state and multiple pairs of TCI states, or one code point in the TCI field in the DCI can correspond to multiple TCI states and one pair of TCI states, which is not limited in the present disclosure.

Or, the first indication information may include a second MAC CE and downlink control information (DCI). The second MAC CE is used to activate at least one TCI state and/or at least one pair of TCI states corresponding to each of multiple code points of the TCI field in the DCI. The DCI is used to indicate one code point in the multiple code points.

That is, the network device can first activate the at least one TCI state and/or at least one pair of TCI states corresponding to multiple code points through the second MAC CE, and then one of the multiple code points is indicated through the DCI, so that the terminal can determine a TCI state corresponding to each DMRS port or CDM group based on the at least one TCI state and/or at least one pair of TCI states corresponding to the indicated code point. That is, it is clear which DMRS ports are in a quasi co-location relationship with a reference signal indicated by which TCI state or which pair of TCI states.

In the present disclosure, the network device may send the at least one TCI state and/or at least one pair of TCI states for joint transmission to the terminal. In this way, the terminal can be enabled to determine each DMRS port in the joint transmission is quasi-co-located with the first reference signal indicated by which TCI state or which pair of TCI states, so that the joint transmission based on multiple TRPs can be reliably realized, and transmission performance of CJT based on multiple TRPs can be improved.

With reference to FIG. 11, FIG. 11 is a flowchart of a method for indicating a transmission configuration indication state provided by an embodiment of the present disclosure. The method is performed by a network device. As shown in FIG. 11, the method may include but is not limited to the following steps.

Step 1101, second indication information is sent to a terminal, the second indication information is used to indicate a mapping relationship between at least one TCI state and/or at least one pair of TCI states and at least one DMRS port respectively, or, the second indication information is used to indicate a mapping relationship between the at least one TCI state and/or at least one pair of TCI states and at least one CDM group respectively.

Optionally, one TCI state can correspond to at least one DMRS port, and numbers of DMRS ports corresponding to different TCI states can be the same or different. For example, some correspond to one DMRS port, and some correspond to two DMRS ports. The present disclosure does not limit this.

For example, the second indication information indicates a mapping relationship between at least one DMRS port and each of two TCI states, respectively. For example, the second indication information indicates that, joint TCI state 1 corresponds to DMRS port 0, joint TCI state 2 corresponds to DMRS port 1; or joint TCI state 1 corresponds to DMRS port 0 and DMRS port 1, and joint TCI state 2 corresponds to DMRS port 2.

Or, the second indication information indicates a mapping relationship between at least one DMRS port and each pair of two pairs of TCI states, respectively. For example, the second indication information indicates that: one pair of TCI states (DL TCI state 1 and UL TCI state 1) corresponds to DMRS port 1, and the other pair of TCI states (DL TCI state 2 and UL TCI state 2) corresponds to DMRS port 2.

Or, the second indication information indicates a mapping relationship between at least one DMRS port and each of one TCI state and one pair of TCI states, respectively. For example, the second indication information indicates that joint TCI state 1 corresponds to DMRS port 1, DL TCI state 2 and UL TCI state 2 together corresponds to DMRS port 2.

Or, the second indication information indicates a mapping relationship between one CDM group and each of two TCI states, respectively. Each CDM group includes at least one DMRS port. Numbers of DMRS ports included in different CDM groups may be the same or different. For example, the second indication information indicates that, joint TCI state 1 corresponds to CDM group 1, and joint TCI state 2 corresponds to CDM group 2. CDM group 1 includes DMRS port 0, CDM group 2 includes DMRS port 2. Or, CDM group 1 includes DMRS port 0 and DMRS port 1, CDM group 2 includes DMRS port 2. Or, CDM group 1 includes DMRS port 0 and DMRS port 1, CDM group 2 includes DMRS port 2 and DMRS port 3, etc. This is not limited here.

Or, the second indication information indicates a mapping relationship between one CDM group and each pair of two pairs of TCI states, respectively. Each CDM group includes at least one DMRS port, and numbers of DMRS ports included in different CDM groups may be the same or different. For example, the second indication information indicates that, one pair of TCI states (DL TCI state 1 and UL TCI state 1) corresponds to CDM group 1, and the other pair of TCI states (DL TCI state 2 and UL TCI state 2) corresponds to CDM Group 2. CDM group 1 includes DMRS port 0, and CDM group 2 includes DMRS port 2; or, CDM group 1 includes DMRS port 0 and DMRS port 1, and CDM group 2 includes DMRS port 2; or, CDM group 1 includes DMRS port 0 and DMRS port 1, and CDM group 2 includes DMRS port 2 and DMRS port 3, etc. This is not limited here.

Or, the second indication information indicates a mapping relationship between one CDM group and each of one TCI state and one pair of TCI states, respectively. The number of DMRS ports included in the CDM group is at least one, and numbers of DMRS ports included in different CDM groups can be the same or different. For example, the second indication information indicates that, joint TCI state 1 corresponds to CDM group 1, and a pair of TCI states (DL TCI state 2 and UL TCI state 2) corresponds to CDM group 2. CDM group 1 includes DMRS port 0, and CDM group 2 includes DMRS port 2; or, CDM group 1 includes DMRS port 0 and DMRS port 1, and CDM group 2 includes DMRS port 2; or, CDM group 1 includes DMRS port 0 and DMRS port 1, and CDM group 2 includes DMRS port 2 and DMRS port 3, etc. This is not limited here.

Or, the second indication information indicates a mapping relationship between at least one DMRS port and each of four TCI states, respectively. For example, the second indication information indicates that, joint TCI state 1 corresponds to DMRS port 0, joint TCI state 2 corresponds to DMRS port 1, joint TCI state 3 corresponds to DMRS port 2, and joint TCI state 4 corresponds to DMRS port 3.

Or, the second indication information indicates a mapping relationship between at least one DMRS port and each pair of four pairs of TCI states, respectively. For example, the second indication information indicates that, a pair of TCI states (DL TCI state 1 and UL TCI state 1) corresponds to DMRS port 0; a pair of TCI states (DL TCI state 2 and UL TCI state 2) corresponds to DMRS port 1; a pair of TCI states (DL TCI state 3 and UL TCI state 3) corresponds to DMRS port 2; and a pair of TCI states (DL TCI state 4 and UL TCI state 4) corresponds to DMRS port 3.

Or, the second indication information indicates a mapping relationship between at least one DMRS port and each of two TCI states and two pairs of TCI states, respectively. For example, the second indication information indicates that, joint TCI state 1 corresponds to DMRS port 0, joint TCI state 2 corresponds to DMRS port 1, one pair of TCI states (DL TCI state 3 and UL TCI state 3) corresponds to DMRS port 2, and the other pair of TCI states (DL TCI state 4 and UL TCI state 4) correspond to DMRS port 3.

Or, the second indication information indicates a mapping relationship between one CDM group and each of three TCI states, respectively. Each CDM group includes at least one DMRS port, and numbers of DMRS ports included in different CDM groups may be the same or different. For example, the second indication information indicates that, joint TCI state 1 corresponds to CDM group 1, joint TCI state 2 corresponds to CDM group 2, and joint TCI state 3 corresponds to CDM group 3. CDM group 1 includes DMRS port 0, CDM group 2 includes DMRS port 2, and CDM group 3 includes DMRS port 4; or CDM group 1 includes DMRS port 0 and DMRS port 1, CDM group 2 includes DMRS port 2, and CDM group 3 includes DMRS port 4; or, CDM group 1 includes DMRS port 0 and DMRS port 1, CDM group 2 includes DMRS port 2 and DMRS port 3, CDM group 3 includes DMRS port 4; or, CDM group 1 includes DMRS port 0 and DMRS port 1, CDM group 2 includes DMRS port 2 and DMRS port 3, CDM group 3 includes DMRS port 4 and DMRS port 5, etc. This is not limited here.

Or, the second indication information indicates a mapping relationship between one CDM group and each of three pairs of TCI states, respectively. A number of DMRS ports in each CDM group is at least one, and numbers of DMRS ports of different CDM groups may be the same or different. For example, the second indication information indicates that, one pair of TCI states (DL TCI state 1 and UL TCI state 1) corresponds to CDM group 1, one pair of TCI states (DL TCI state 2 and UL TCI state 2) corresponds to CDM group 2, and one pair of TCI states (DL TCI state 3 and UL TCI state 3) corresponds to CDM group 3. CDM group 1 includes DMRS port 0, CDM group 2 includes DMRS port 2, and CDM group 3 includes DMRS port 4; or CDM group 1 includes DMRS port 0 and DMRS port 1, CDM group 2 includes DMRS port 2, and CDM group 3 includes DMRS port 4; or, CDM group 1 includes DMRS port 0 and DMRS port 1, CDM group 2 includes DMRS port 2 and DMRS port 3, CDM group 3 includes DMRS port 4; or, CDM group 1 includes DMRS port 0 and DMRS port 1, CDM group 2 includes DMRS port 2 and DMRS port 3, CDM group 3 includes DMRS port 4 and DMRS port 5, etc. This is not limited here.

Or, the second indication information indicates a mapping relationship between a CDM group and each of one TCI state and two pairs of TCI states, respectively. Each CDM group includes at least one DMRS port, and numbers of DMRS port included in each CDM group can be the same or different. For example, the second indication information indicates that, joint TCI state 1 corresponds to CDM group 1, one pair of TCI states (DL TCI state 2 and UL TCI state 2) corresponds to CDM group 2, and one pair of TCI states (DL TCI state 3 and UL TCI state 3) correspond to CDM group 3. CDM group 1 includes DMRS port 0, CDM group 2 includes DMRS port 2, and CDM group 3 includes DMRS port 4; or CDM group 1 includes DMRS port 0 and DMRS port 1, CDM group 2 includes DMRS port 2, and CDM group 3 includes DMRS port 4; or, CDM group 1 includes DMRS port 0 and DMRS port 1, CDM group 2 includes DMRS port 2 and DMRS port 3, and CDM group 3 includes DMRS port 4; or, CDM group 1 includes DMRS port 0 and DMRS port 1, CDM group 2 includes DMRS port 2 and DMRS port 3, and CDM group 3 includes DMRS port 4 and DMRS port 5, etc. This is not limited here.

It should be noted that in the present disclosure, the mapping relationship between a TCI state or a pair of TCI states and a CDM group, and the corresponding relationship between a CDM group and a DMRS port are all illustrative descriptions and cannot be constructed as a limited description to the technical solution of the present disclosure.

Optionally, in the present disclosure, the mapping relationship may also be default. The terminal may determine, according to a default mapping relationship, a mapping relationship between the at least one TCI state and/or at least one pair of TCI states and at least one DMRS port, or a mapping relationship between the at least one TCI state and/or at least one pair of TCI states and at least one CDM group, without any indication from the network device.

The default mapping relationship may be agreed upon by the protocol.

Optionally, in the default mapping relationship, different DMRS ports can correspond to different TCI states. Or, different CDM groups correspond to different TCI states (DMRS ports belonging to one CDM group correspond to the same TCI state). Or, the default mapping relationship specifies which DMRS ports correspond to the same TCI state.

Optionally, the default relationship can support that one TCI state corresponds to at least one DMRS port. The numbers of DMRS ports corresponding to different TCI states can be the same or different. For example, some TCI states correspond to one DMRS port and some TCI states correspond to two DMRS ports.

For example, the default mapping relationship indicates a mapping relationship between two TCI states and at least one DMRS port respectively. For example, the second indication information indicates that, joint TCI state 1 corresponds to DMRS port 0, and joint TCI state 2 corresponds to DMRS port 1; or joint TCI state 1 corresponds to DMRS port 0 and DMRS port 1, and joint TCI state 2 corresponds to DMRS port 2. Or, the default mapping relationship indicates a mapping relationship between two pairs of TCI states, respectively, and at least one DMRS port. For example, the second indication information indicates that, one pair of TCI states (DL TCI state 1 and UL TCI state 1) corresponds to DMRS port 1, and the other pair of TCI states (DL TCI state 2 and UL TCI state 2) corresponds to DMRS port 2.

Or, the default mapping relationship indicates a mapping relationship between one TCI state and one pair of TCI states, respectively, and at least one DMRS port. For example, the second indication information indicates that joint TCI state 1 corresponds to DMRS port 1, and DL TCI state 2 and UL TCI state 2 correspond to DMRS port 2.

Or, the default mapping relationship indicates a mapping relationship between two TCI states, respectively, and a CDM group. Each CDM group includes at least one DMRS port, and the numbers of DMRS ports included in different CDM groups can be the same or different. For example, the second indication information indicates that joint TCI state 1 corresponds to CDM group 1, and joint TCI state 2 corresponds to CDM group 2. CDM group 1 includes DMRS port 0, and CDM group 2 includes DMRS port 2; or, CDM group 1 includes DMRS port 0 and DMRS port 1, and CDM group 2 includes DMRS port 2; or, CDM group 1 includes DMRS port 0 and DMRS port 1, and CDM group 2 includes DMRS port 2 and DMRS port 3, etc. This is not limited here.

Or, the default mapping relationship indicates a mapping relationship between two pairs of TCI states, respectively, and a CDM group. Each CDM group includes at least one DMRS port, and the numbers of DMRS ports included in different CDM groups can be the same or different. For example, the second indication information indicates that, one pair of TCI states (DL TCI state 1 and UL TCI state 1) corresponds to CDM group 1, and the other pair of TCI states (DL TCI state 2 and UL TCI state 2) corresponds to CDM Group 2. CDM group 1 includes DMRS port 0, and CDM group 2 includes DMRS port 2; or, CDM group 1 includes DMRS port 0 and DMRS port 1, and CDM group 2 includes DMRS port 2; or, CDM group 1 includes DMRS port 0 and DMRS port 1, and CDM group 2 includes DMRS port 2 and DMRS port 3, etc. This is not limited here.

Or, the default mapping relationship indicates a mapping relationship between a TCI state and a pair of TCI states, respectively, and a CDM group. Each CDM group includes at least one DMRS port, and the numbers of DMRS ports included in different CDM groups can be the same or different. For example, the second indication information indicates that, joint TCI state 1 corresponds to CDM group 1, and the pair of TCI states (DL TCI state 2 and UL TCI state 2) corresponds to CDM group 2. CDM group 1 includes DMRS port 0, and CDM group 2 includes DMRS port 2; or, CDM group 1 includes DMRS port 0 and DMRS port 1, and CDM group 2 includes DMRS port 2; or, CDM group 1 includes DMRS port 0 and DMRS port 1, and CDM group 2 includes DMRS port 2 and DMRS port 3, etc. This is not limited here.

Or, the default mapping relationship indicates a mapping relationship between four TCI states and at least one DMRS port respectively. For example, the second indication information indicates that joint TCI state 1 corresponds to DMRS port 0, joint TCI state 2 corresponds to DMRS port 1, joint TCI state 3 corresponds to DMRS port 2, and joint TCI state 4 corresponds to DMRS port 3.

Or, the default mapping relationship indicates a mapping relationship between at least one DMRS port and four pairs of TCI states, respectively. For example, the second indication information indicates that: one pair of TCI states (DL TCI state 1 and UL TCI state 1) corresponds to DMRS port 0; one pair of TCI states (DL TCI state 2 and UL TCI state 2) corresponds to DMRS port 1; one pair of TCI states (DL TCI state 3 and UL TCI state 3) corresponds to DMRS port 2; one pair of TCI states (DL TCI state 4 and UL TCI state 4) corresponds to DMRS port 3.

Or, the default mapping relationship indicates a mapping relationship between at least one DMRS port and two TCI states and two pairs of TCI states, respectively. For example, the second indication information indicates that, joint TCI state 1 corresponds to DMRS port 0, joint TCI state 2 corresponds to DMRS port 1, one pair of TCI states (DL TCI state 3 and UL TCI state 3) corresponds to DMRS port 2, and one pair of TCI states (DL TCI state 4 and UL TCI state 4), corresponds to DMRS port 3.

Or, the default mapping relationship indicates a mapping relationship between a CDM group and 3 TCI states respectively. Each CDM group includes at least one DMRS port, and the numbers of DMRS ports included in different CDM groups can be the same or different. For example, the second indication information indicates that joint TCI state 1 corresponds to CDM group 1, joint TCI state 2 corresponds to CDM group 2, and joint TCI state 3 corresponds to CDM group 3. CDM group 1 includes DMRS port 0, CDM group 2 includes DMRS port 2, and CDM group 3 includes DMRS port 4; or CDM group 1 includes DMRS port 0 and DMRS port 1, CDM group 2 includes DMRS port 2, and CDM group 3 includes DMRS port 4; or, CDM group 1 includes DMRS port 0 and DMRS port 1, CDM group 2 includes DMRS port 2 and DMRS port 3, and CDM group 3 includes DMRS port 4; or, CDM group 1 includes DMRS port 0 and DMRS port 1, CDM group 2 includes DMRS port 2 and DMRS port 3, and CDM group 3 includes DMRS port 4 and DMRS port 5, etc. This is not limited here.

Or, the default mapping relationship indicates a mapping relationship between a CDM group and 3 pairs of TCI states, respectively. Each CDM group includes at least one DMRS port, and the numbers of DMRS ports included in different CDM groups can be the same or different. For example, the second indication information indicates that: one pair of TCI states (DL TCI state 1 and UL TCI state 1) corresponds to CDM group 1, one pair of TCI states (DL TCI state 2 and UL TCI state 2) corresponds to CDM group 2, and one pair of TCI states (DL TCI state 3 and UL TCI state 3) correspond to CDM group 3. CDM group 1 includes DMRS port 0, CDM group 2 includes DMRS port 2, and CDM group 3 includes DMRS port 4; or CDM group 1 includes DMRS port 0 and DMRS port 1, CDM group 2 includes DMRS port 2, and CDM group 3 includes DMRS port 4; or, CDM group 1 includes DMRS port 0 and DMRS port 1, CDM group 2 includes DMRS port 2 and DMRS port 3, and CDM group 3 includes DMRS port 4; or, CDM group 1 includes DMRS port 0 and DMRS port 1, CDM group 2 includes DMRS port 2 and DMRS port 3, and CDM group 3 includes DMRS port 4 and DMRS port 5, etc. This is not limited here.

Or, the default mapping relationship indicates a mapping relationship between a CDM group and 1 TCI state and 2 pairs of TCI states, respectively. Each CDM group includes at least one DMRS port, and the numbers of DMRS ports included in different CDM groups can be the same or different. For example, the second indication information indicates that, joint TCI state 1 corresponds to CDM group 1, one pair of TCI states (DL TCI state 2 and UL TCI state 2) corresponds to CDM group 2, and one pair of TCI states (DL TCI state 3 and UL TCI state 3) corresponds to CDM group 3. CDM group 1 includes DMRS port 0, CDM group 2 includes DMRS port 2, and CDM group 3 includes DMRS port 4; or CDM group 1 includes DMRS port 0 and DMRS port 1, CDM group 2 includes DMRS port 2, and CDM group 3 includes DMRS port 4; or, CDM group 1 includes DMRS port 0 and DMRS port 1, CDM group 2 includes DMRS port 2 and DMRS port 3, and CDM group 3 includes DMRS port 4; or, CDM group 1 includes DMRS port 0 and DMRS port 1, CDM group 2 includes DMRS port 2 and DMRS port 3, and CDM group 3 includes DMRS port 4 and DMRS port 5, etc. This is not limited here.

It should be noted that in the present disclosure, the mapping relationship between a CDM group and a TCI state or a pair of TCI states, and the corresponding relationship between a CDM group and a DMRS port are all illustrative descriptions and cannot be used as a limitation to the technical solution of the present disclosure.

Step 1102, first indication information is sent to the terminal, the first indication information is used to indicate at least one TCI state and/or at least one pair of TCI states for joint transmission.

In this disclosure, the execution order of the above-mentioned steps 1101 and 1102 is not limited, that is, step 1102 may be executed first, and then step 1101 may be executed, or steps 1101 and 1102 may be executed at the same time, etc.

In the present disclosure, the network device may indicate to the terminal the at least one TCI state and/or at least one pair of TCI states for joint transmission, and the mapping relationships between multiple TCI states and DMRS ports or CDM groups respectively. In this way, the terminal can accurately determine the transmission parameter corresponding to each DMRS port in the joint transmission. Thus, coherent joint transmission based on multiple TRPs is reliably realized, and the transmission performance of CJT based on multiple TRPs is improved.

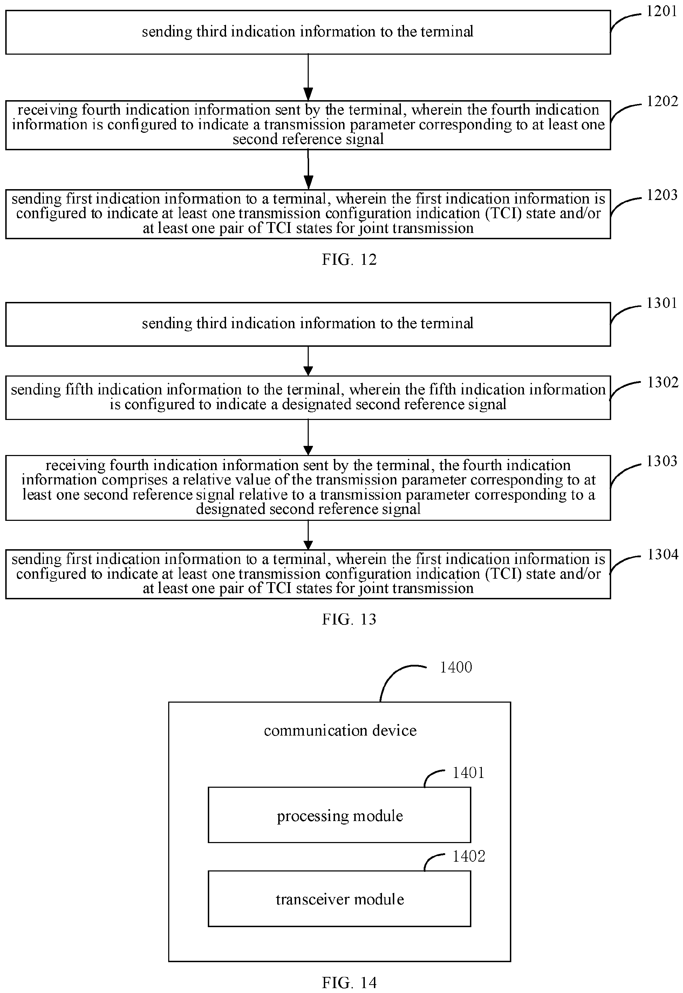

With reference to FIG. 12, FIG. 12 is a flowchart of a method for indicating a transmission configuration indication state provided by an embodiment of the present disclosure. The method is performed by a remote terminal. As shown in FIG. 12, the method may include but is not limited to the following steps.

Step 1201, third indication information is sent to a terminal.

The third indication information is used to indicate a second reference signal corresponding to each CMR or CSI-RS port group, or a second reference signal corresponding to each CMR group or CSI-RS port group set. One CMR group includes at least one CMR, and one CSI-RS port group set includes at least one CSI-RS port group.

The CMR corresponds to the TRP one-to-one, or the CSI-RS port group corresponds to the TRP one-to-one. For example, the number of CSI-RS ports is 32, there are 4 TRPs, and each TRP corresponds to 8 ports. The CMR is a CSI-RS resource used for channel measurement.

That is to say, if the third indication information indicates the second reference signal corresponding to each CMR or CSIRS port group, that is, the number of second reference signals indicated by the third indication information is the same as the number of CMRs or CSI-RS port groups, the second reference signal corresponding to each TRP is indicated. Or, if the third indication information indicates the second reference signal corresponding to each CMR group or CSIRS port group set, that is, the number of second reference signals indicated by the third indication information is less than the number of CMRs or CSI-RS port groups, the second reference signal corresponding to each TRP group is indicated. Each TRP group includes at least one TRP.

In the disclosure, the network device can send an RS corresponding to each TRP to the terminal, and then the terminal can determine the transmission parameter corresponding to each RS, such as determining at least one of an average delay, a delay spread, a Doppler shift, or a Doppler spread corresponding to each RS.

Step 1202, fourth indication information sent by the terminal is received, the third indication information is used to indicate a transmission parameter corresponding to at least one second reference signal.

Optionally, a SRS may be adjusted based on at least one transmission parameter and then sent. For example, a transmission delay of the SRS is set based on a value of the average delay of the second reference signal, and an impact of the Doppler parameter of the SRS is adjusted based on a value of at least one of the Doppler shift and the Doppler spread of the second reference signal before transmission. Each SRS corresponds to a transmission parameter indicating a second reference signal.

Optionally, the fourth indication information may also be included in CSI. Thus, the transmission parameter corresponding to the at least one second reference signal is displayed and fed back to the network device. For example, the value of at least one of the average delay, delay spread, Doppler shift, or Doppler spread corresponding to the second reference signal is reported to the base station based on a CSI feedback framework. The CSI feedback framework includes reporting mechanisms such as a feedback precoding matrix indication (PMI), a rank indication (RI), a layer indication (LI), a channel quality indication (CQI), an L1 layer reference signal received power (RSRP), an L1 layer signal to interference and noise ratio (SINR), etc.

The designated second reference signal may be indicated by the network device to the terminal, or may be determined by the terminal and then reported to the network device. The disclosure does not limit this.

In the present disclosure, after the terminal sends the relative value of the transmission parameter corresponding to at least one second reference signal, or the absolute value of the transmission parameter corresponding to each second reference signal to the network device, the network device can determines the first reference signal of the transmission parameter for joint transmission that is to be indicated to the terminal according to the transmission parameter corresponding to each second reference signal.

Optionally, the network device may select a second reference signal based on at least one transmission parameter corresponding to each second reference signal, and determine the first reference signal in the TCI state to be indicated. For example, the network device may determine multiple second reference signals as first reference signals respectively. Or the network device may also determine a designated second reference signal among the multiple second reference signals as the first reference signal. The designated second reference signal may be determined by a base station or may be indicated by a terminal report, etc. The disclosure does not limit this.

In the present disclosure, the network device may determine the transmission parameter used by the terminal for joint transmission based on a relative relationship between the transmission parameters and corresponding second reference signals. That is, the terminal may report the transmission parameter corresponding to the designated second reference signal, or may not report the transmission parameter corresponding to the designated second reference signal. The disclosure does not limit this.

Step 1203, first indication information is sent to the terminal, the first indication information is used to indicate at least one TCI state and/or at least one pair of TCI states for joint transmission.

In the present disclosure, after receiving the transmission parameter corresponding to the second reference signal sent by the terminal, the network device can determine the first reference signal based on which the terminal can perform the joint transmission, and indicates the first reference signal to the terminal through the at least one TCI state and/or at least one pair of TCI states. Afterwards, the terminal can perform the joint transmission based on the transmission parameter corresponding to the first reference signal indicated in the TCI state sent by the network device.

That is to say, the terminal may assume that each DMRS port of a PDSCH is quasi-co-located with a DL RS or an UL RS indicated by a corresponding TCI state, and that each DMRS port of a PUSCH is quasi-co-located with a DL RS or an UL RS indicated by a corresponding TCI state.

It should be noted that, a QCL indicated by the TCI state includes at least one of type A, B, C, and D. All of the reference signals indicated by the QCL types A, B, C, and D may be a CSI-RS configured as a TRS. A reference signal indicated by QCL Type D may be a CSI-RS configured with repetitions, or a CSI-RS that is not configured as a TRS nor configured with a repetition. That is, the first reference signal here may only include the second reference signal. For example, the first reference signal is a CSI-RS configured as a TRS, and the second reference signal is also a CSI-RS configured as a TRS. The first reference signal may also include two different reference signals. For example, the first reference signal includes a CSI-RS configured as a TRS (i.e., the second reference signal), and a CSI-RS configured with repetitions or a CSI-RS that is not configured as TRS nor configured with a repetition.

In the present disclosure, the network device first sends a plurality of second reference signals to the terminal, and then, after receiving the transmission parameter corresponding to at least one second reference signal sent by the terminal, sends the first reference signal for joint transmission to the terminal through the at least one TCI state and/or at least one pair of TCI states. In this way, the terminal can accurately determine the transmission parameter of each DMRS port in joint transmission. Thereby, coherent joint transmission based on multiple TRPs is reliably realized, and the transmission performance of CJT based on multiple TRPs is improved.

With reference to FIG. 13, FIG. 13 is a flowchart of a method for indicating a transmission configuration indication state provided by an embodiment of the present disclosure. The method is performed by a network device. As shown in FIG. 13, the method may include but is not limited to the following steps.

Step 1301, third indication information is sent to a terminal.

The third indication information is used to indicate a second reference signal corresponding to each CMR or CSI-RS port group, or a second reference signal corresponding to each CMR group or CSI-RS port group set. One CMR group includes at least one CMR, and one CSI-RS port group set includes at least one CSI-RS port group.

The CMR corresponds to TRP one-to-one, and the CSI-RS port group corresponds to TRP one-to-one. For example, the number of CSI-RS ports is 32, there are 4 TRPs, and each TRP corresponds to 8 ports.

In the disclosure, the network device can send an RS corresponding to each TRP to the terminal, and then the terminal can determine a transmission parameter corresponding to each RS, such as determining an average delay, a delay spread, a Doppler shift, and a Doppler spread, etc. corresponding to each RS.

For the specific implementation of the above step 1301, reference can be made to the detailed description of any embodiment of the present disclosure, and will not be described again here.

Step 1302, fifth indication information is sent to the terminal, the fifth indication information is used to indicate a designated second reference signal.

Optionally, the fifth indication information may indicate only one designated second reference signal, or may indicate a designated second reference signal in each second reference signal group. That is, the fifth indication information may be used to indicate at least one designated reference signal.

For example, there are a total of 4 second reference signals. The second reference signal is a CSI-RS configured as a TRS. The 4 second reference signals include 4 TRS resources or 4 TRS resource sets, corresponding to 4 TRPs respectively. A designated TRS is defined. A transmission parameter corresponding to the designated TRS may not be fed back or an absolute value may be fed back, so that the terminal can feed back the relative values of transmission parameters of the other three second reference signals relative to the transmission parameter corresponding to the designated TRS.

Or, there are a total of 4 TRS resources or 4 TRS sets, corresponding to 4 TRPs respectively. The 4 TRS can be divided into 2 groups, the first TRS and the second TRS are the first group, and the third TRS and the fourth TRS are the second group. Each group has a designated TRS. Similarly, transmission parameters corresponding to the designated TRSs may not be fed back or the absolute values may be fed back. For a TRS other than the designated TRS in a group, a relative value between its transmission parameter and a transmission parameters corresponding to the designated TRS in the same group may be fed back.

Step 1303, fourth indication information sent by the terminal is received, the fourth indication information includes a relative value of a transmission parameter corresponding to at least one second reference signal relative to a transmission parameter corresponding to the designated reference signal.

For the specific implementation of the above step 1303, reference can be made to the detailed description of any embodiment of the present disclosure, and will not be described again here.

In the present disclosure, the network device may determine the transmission parameters used by the terminal for joint transmission based on a relative relationship between the transmission parameters and the respective second reference signals. That is to say, the terminal may not report the transmission parameter corresponding to the designated second reference signal. Therefore, the network device can designate at least one second reference signal to the terminal as the designated second reference signal, and then the terminal can only report the relative value of the transmission parameter corresponding to the remaining second reference signals relative to the transmission parameter corresponding to the designated second reference signal.

Optionally, in the disclosure, the designated second reference signal may be determined by the terminal, and the terminal reports the determined designated second reference signal to the network device through indication information. That is, in a possible implementation of the present disclosure, the network device may receive sixth indication information sent by the terminal, and the fifth indication information is used for the designated second reference signal.

Step 1304, first indication information is sent to the terminal, the first indication information is used to indicate at least one TCI state and/or at least one pair of TCI states for joint transmission.

In the present disclosure, the network device first indicates multiple reference signals and at least one designated second reference signal to the terminal, and then sends at least one TCI state and/or at least one pair of TCI states for joint transmission to the terminal after receiving the relative value of the transmission parameter corresponding to at least one second reference signals relative to the transmission parameter corresponding to the designated second reference signal sent by the terminal. In this way, the terminal can determine the transmission parameter of each DMRS port for joint transmission based on the first reference signal respectively indicated by the at least one TCI state and/or at least one pair of TCI states. Thereby, coherent joint transmission based on multiple TRPs is reliably realized, and the transmission performance of CJT based on multiple TRPs is improved.

FIG. 14 is a block diagram of a communication device 1400 provided by an embodiment of the present disclosure. The communication device 1400 show in FIG. 14 includes a processing module 1401 and a transceiver module 1402.

It can be understood that the communication device 1400 may be a terminal, a device in the terminal, or a device that can be used in conjunction with the terminal. Alternatively, the communication device 1400 may be a network device, a device in a network device, or a device that can be used in conjunction with the network device.

Optionally, the communication device 1400 is on a terminal side, where:
the transceiver module 1402 is configured to receive first indication information sent by a network device, and the first indication information is configured to indicate at least one transmission configuration indication (TCI) state and/or at least one pair of TCI states for joint transmission

Optionally, the processing module 1401 is configured to determine a transmission parameter of the joint transmission according to a first reference signal respectively indicated by the at least one TCI state and/or at least one pair of TCI states.

Optionally, the transmission parameter comprises at least one of:
an average delay, a delay spread, a Doppler shift, a Doppler spread, or a spatial reception parameter.

Optionally, the processing module 1401 is configured to:
determine a transmission parameter of a Demodulation Reference Signal (DMRS) port of a physical downlink shared channel (PDSCH) according to a first reference signal respectively indicated by a joint TCI state or a downlink TCI state in the at least one TCI state and/or at least one pair of TCI states; or
determine a transmission parameter of a DMRS port of a physical uplink shared channel (PUSCH) according to a first reference signal respectively indicated by a joint TCI state or an uplink TCI state in the at least one TCI state and/or at least one pair of TCI states.

Optionally, the first indication information comprises a first media access control (MAC) control element (CE), wherein the first MAC CE is configured to activate at least one TCI state and/or at least one pair of TCI states corresponding to a code point in a TCI field in downlink control information (DCI).

Optionally, the first indication information comprises a second MAC CE and DCI, wherein the second MAC CE is configured to activate at least one TCI state and/or at least one pair of TCI states corresponding to each of multiple code points in a TCI field in the DCI, and the DCI is configured to indicate one code point in the multiple code points.

Optionally, the transceiver module 1402 is configured to receive second indication information sent by the network device, wherein the second indication information is configured to indicate a mapping relationship between the at least one TCI state and/or at least one pair of TCI states and at least one DMRS port, or the second indication information is configured to indicate a mapping relationship between the at least one TCI state and/or at least one pair of TCI states and at least one code division multiplexing (CDM) group; or
the processing module 1401 is configured to determine, according to a default mapping relationship, a mapping relationship between the at least one TCI state and/or at least one pair of TCI states and at least one DMRS port, or a mapping relationship between the at least one TCI state and/or at least one pair of TCI states and at least one CDM group.

Optionally, the processing module 1401 is configured to determine that all transmission parameters corresponding to a first reference signal indicated by a first TCI state in the at least one TCI state and/or at least one pair of TCI states are used for a corresponding first DMRS port or first CDM group.

Optionally, the processing module 1401 is configured to determine that transmission parameters except at least one designated transmission parameter in transmission parameters corresponding to a first reference signal indicated by a second TCI state in the at least one TCI state and/or at least one pair of TCI states are used for a corresponding second DMRS port or second CDM group; or
determine that at least one designated transmission parameter corresponding to a first reference signal indicated by a designated TCI state is used for the second DMRS port or the second CDM group.

Optionally, a TCI state with a minimum TCI state identifier, a TCI state indicated by a low bit of a MAC CE, or a first TCI state indicated by the first indication information.

Optionally, the transceiver module 1402 is configured to receive third indication information sent by the network device, wherein the third indication information is configured to indicate a second reference signal corresponding to each channel measurement resource (CMR) or channel state information reference signal (CSI-RS) port group, or a second reference signal corresponding to each CMR group or CSI-RS port group set, wherein one CMR group comprises at least one CMR, and one CSI-RS port group set comprises at least one CSI-RS port group;
the processing module 1401 is configured to determine a transmission parameter corresponding to each second reference signal; and
the transceiver module 1402 is configured to send fourth indication information to the network device, wherein the fourth indication information is configured to indicate a transmission parameter corresponding to at least one second reference signal.

Optionally, the fourth indication information is indicated by a sounding reference signal (SRS), or the fourth indication information is included in channel state information (CSI).

Optionally, the fourth indication information comprises an absolute value of the transmission parameter corresponding to each second reference signal; or,
the fourth indication information comprises a relative value of the transmission parameter corresponding to at least one second reference signal relative to a transmission parameter corresponding to a designated second reference signal.

Optionally, the transceiver module 1402 is configured to receive fifth indication information sent by the network device, wherein the fifth indication information is configured to indicate at least one designated second reference signal.

Optionally, the processing module 1401 is configured to determine a second reference signal that meets a designated condition as the designated second reference signal; and
the transceiver module 1402 is configured to send sixth indication information to the network device, wherein the sixth indication information is configured to indicate the at least one designated second reference signal.

Optionally, the processing module 1401 is configured to:
in response to a delay corresponding to a candidate second reference signal being less than a delay corresponding to each of remaining second reference signals, determine that the candidate second reference signal meets the designated condition; or,
in response to a delay corresponding to a candidate second reference signal in any second reference signal group being less than a delay corresponding to each of remaining second reference signals in the any reference signal group, determine that the candidate second reference signal in the any reference signal group meets the designated condition.

In the present disclosure, the terminal may receive the at least one TCI state and/or at least one pair of TCI states for joint transmission sent by the network device. In this way, the terminal can accurately determine, for each DMRS port in the joint transmission, a first reference signal indicated by which TCI state or which pair of TCI states is in a quasi co-location relationship with the DMRS port, so that the joint transmission based on multiple TRPs can be reliably realized, which improves the transmission performance of CJT based on multiple TRPs.

Optionally, the communication device 1400 is on the network device side, where:

The transceiver module 1402 is configured to send first indication information to a terminal, wherein the first indication information is configured to indicate at least one transmission configuration indication (TCI) state and/or at least one pair of TCI states for joint transmission.

Optionally, the first indication information comprises a first media access control (MAC) control element (CE), wherein the first MAC CE is configured to activate at least one TCI state and/or at least one pair of TCI states corresponding to a code point in a TCI field in downlink control information (DCI).

Optionally, the first indication information comprises a second MAC CE and DCI, wherein the second MAC CE is configured to activate at least one TCI state and/or at least one pair of TCI states corresponding to each of multiple code points in a TCI field in the DCI, and the DCI is configured to indicate one code point in the multiple code points.

Optionally, the transceiver module 1402 is configured to:
send second indication information to the terminal, wherein the second indication information is configured to indicate a mapping relationship between the at least one TCI state and/or at least one pair of TCI states and at least one demodulation reference signal (DMRS) port, or the second indication information is configured to indicate a mapping relationship between the at least one TCI state and/or at least one pair of TCI states and at least one code division multiplexing (CDM) group.

Optionally, the transceiver module 1402 is configured to:
send third indication information to the terminal, wherein the third indication information is configured to indicate a second reference signal corresponding to each channel measurement resource (CMR) or a channel state information reference signal (CSI-RS) port group, or a second reference signal corresponding to each CMR group or CSI-RS port group set, wherein one CMR group comprises at least one CMR, and one CSI-RS port group set comprises at least one CSI-RS port group, wherein the second reference signal is different from a first reference signal indicated by the TCI state; and
receive fourth indication information sent by the terminal, wherein the fourth indication information is configured to indicate a transmission parameter corresponding to at least one second reference signal.

Optionally, the fourth indication information is indicated by a sounding reference signal (SRS), or the fourth indication information is included in channel state information (CSI).

Optionally, the fourth indication information comprises an absolute value of the transmission parameter corresponding to each second reference signal; or,
the fourth indication information comprises a relative value of the transmission parameter corresponding to at least one second reference signal relative to a transmission parameter corresponding to a designated second reference signal.

Optionally, the transceiver module 1402 is configured to:
send fifth indication information to the terminal, wherein the fifth indication information is configured to indicate at least one designated second reference signal; or
receive sixth indication information sent by the terminal, wherein the sixth indication information is configured to indicate the at least one designated second reference signal.

In the present disclosure, the network device may send the at least one TCI state and/or at least one pair of TCI states for joint transmission to the terminal. In this way, the terminal can accurately determine, for each DMRS port in the joint transmission, a first reference signal indicated by which TCI state or which pair of TCI states is in a quasi co-location relationship with the DMRS port, so that the joint transmission based on multiple TRPs can be reliably realized, which improves the transmission performance of CJT based on multiple TRPs.

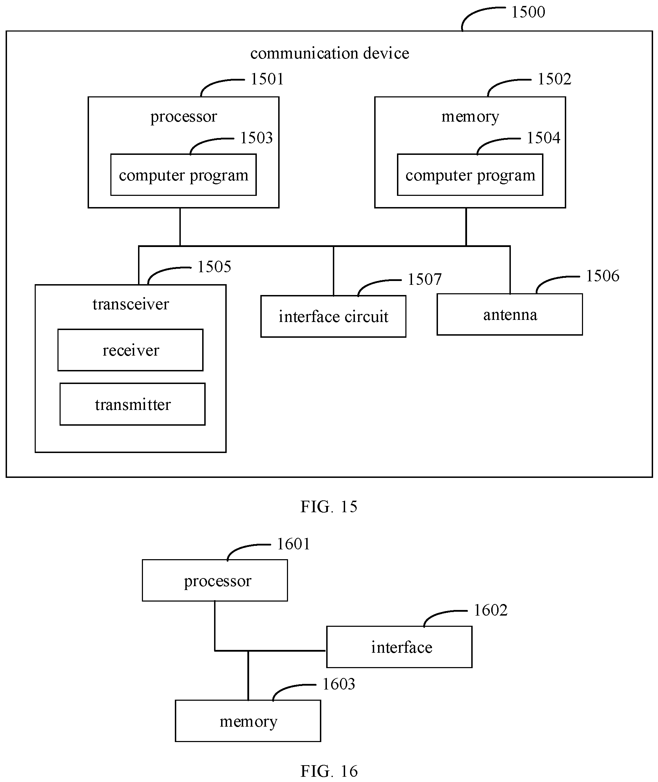

Referring to FIG. 15, FIG. 15 is a block diagram of a communication device 1500 provided by an embodiment of the present disclosure. The communication device 1500 can be a terminal, a network device, or can be a chip, a chip system, or a processor that supports the terminal to implement the above method, or can be a chip, a chip system, or a processor that supports the network device to implement the above method. The communication device can be used to implement the methods described in the above method embodiments, details of which may refer to the description in the above method embodiments.

The communication device 1500 may include one or more processors 1501. The processor 1501 may be a general-purpose processor or a dedicated processor, such as, a baseband processor or a central processor. The baseband processor may be used for processing communication protocols and communication data. The central processor may be used for controlling the communication device (e.g., a base station, a baseband chip, a terminal, a terminal chip, a distributed unit (DU), or a central unit (CU)), executing a computer program, and processing data of the computer program.

Optionally, the communication device 1500 may include one or more memories 1502 on which a computer program 1104 may be stored. The processor 1501 executes the computer program 1504 to cause the communication device 1500 to perform the methods described in the above method embodiments. Optionally, the memory 1502 may also store data. The communication device 15100 and the memory 1502 can be provided separately or integrated together.

Optionally, the communication device 1500 may also include a transceiver 1505 and an antenna 1506. The transceiver 1505 may be referred to as a transceiver unit, a transceiver machine, or a transceiver circuit, for realizing a transceiver function. The transceiver 1505 may include a receiver and a transmitter. The receiver may be referred to as a receiving machine or a receiving circuit, etc., for realizing the receiving function. The transmitter may be referred to as a transmitter machine or a transmitting circuit, etc., for realizing the transmitting function.

Optionally, the communication device 1500 may include one or more interface circuits 11507. The interface circuits 1507 are used to receive code instructions and transmit them to the processor 1501. The processor 1501 runs the code instructions to cause the communication device 1500 to perform the method described in the method embodiments.

The communication device 1500 is a terminal. The processor 1501 is used to perform the step 302 in FIG. 3, the step 403 in FIG. 4, the step 503 in FIG. 5, etc. The transceiver 1505 is used to perform the step 201 in FIG. 2, the step 301 in FIG. 3, the step 401, step 402 in FIG. 4, etc.

The communication device 1500 is a network device. The transceiver 1505 is used to perform the step 1001 in FIG. 10, the step 1001, step 1102 in FIG. 11, etc.

In an implementation, the processor 1501 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 1501 may store a computer program 1503, and the computer program 1503 runs on the processor 1501, causing the communication device 1500 to perform the method described in the above method embodiments. The computer program 1503 may be solidified in the processor 1501, in which case the processor 1501 may be implemented by hardware.

In an implementation, the communication device 1500 may include circuits. The circuits may implement the sending, receiving or communicating functions in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver can also be produced using various IC process technologies, such as a complementary metal oxide semiconductor (CMOS), n Metal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a remote terminal, but the scope of the communication device described in the disclosure is not limited thereto, and the structure of the communication device may not be limited by FIG. 11. The communication device may be a stand-alone device or may be part of a larger device. For example, the communication device may be:
(1) a stand-alone integrated circuit (IC), a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

For a case where the communication device may be a chip or a chip system, FIG. 16 which is structural diagram of the chip may be referred to. The chip shown in FIG. 16 includes a processor 1601 and an interface 1603. There may be one or more processors 1601, and there may be multiple interfaces 1603.

For a case where the chip is used to implement the functions of the terminal in the embodiments of the present disclosure:
the processor 1601 is used to perform step 302 in FIG. 3, or step 403 in FIG. 4, etc.

Optionally, the chip further includes a memory 1603 used to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described functions, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on a computer, processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs)) or a wireless manner (e.g., using infrared wave, wireless wave, or microwave). The computer-readable storage medium may be any available medium to which the computer is capable to access or a data storage device such as a server, data center that contains one or more available mediums integrated. The available medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art may understand that the first, second, and other various numerical numbers involved in the disclosure are only described for the convenience of differentiation, and are not used to limit the scope of the embodiments of the disclosure, nor to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D", are used to distinguish different technical features of the type, the technical features described using the "first", "second", and "third", and "A", "B", "C" and "D", do not indicate any order of precedence or magnitude.

The correspondence relationships shown in the various tables in the disclosure can be configured or predefined. The values of information in each table are only examples and can be configured to other values, which are not limited by the disclosure. When configuring the correspondence relationships between information and various parameters, it is not necessary to configure all the correspondence relationships shown in each table. For example, in the tables in the disclosure, some correspondence relationships shown in certain rows may not be configured. For another example, appropriate deformation adjustments can be made based on the above table, such as splitting, merging, etc. The names of the parameters shown in the titles of the above tables can also use other names that can be understood by the communication device, and the values or representations of the parameters can be other values or representations that can be understood by the communication device. When implementing the above tables, other data structures can be used, such as arrays, queues, containers, stacks, linear tables, pointers, linked lists, trees, graphs, structures, classes, heaps, hash lists, or hash tables.

The term "predefine" in this disclosure may be understood as define, pre-define, store, pre-store, pre-negotiate, pre-configure, solidify, or pre-fire.

Those skilled in the art may realize that the units and algorithm steps of the various examples described with reference to the embodiments disclosed herein are capable of being implemented in the form of electronic hardware, or a combination of computer software and electronic hardware. Whether these functions are performed in hardware or software depends on the particular application and design constraints of the technical solution. Those skilled in the art may use different methods to implement the described functions for each particular application, but such implementations should not be considered as beyond the scope of the disclosure.

It is clearly understood by those skilled in the art that, for the convenience and brevity of description, the specific working processes of the systems, apparatuses, and units described above can be referred to the corresponding processes in the preceding method embodiments, which is not elaborated herein.

The above are only detailed embodiments of the present disclosure, but the protection scope of the present disclosure is not limited thereto. Any skilled familiar with the technical field can easily think of changes or substitutions within the technical scope disclosed in the present disclosure, which should be covered by the protection scope of this disclosure. Therefore, the protection scope of the present disclosure should be subject to the protection scope of the claims.

## Claims

1. A method for indicating a transmission configuration indication state, performed by a terminal, comprising:
receiving first indication information sent by a network device, wherein the first indication information is configured to indicate at least one transmission configuration indication (TCI) state and/or at least one pair of TCI states for joint transmission.

2. The method of claim 1, further comprising:
determining a transmission parameter of the joint transmission according to a first reference signal respectively indicated by the at least one TCI state and/or at least one pair of TCI states.

3. The method of claim 2, wherein the transmission parameter comprises at least one of:
an average delay, a delay spread, a Doppler shift, a Doppler spread, or a spatial reception parameter.

4. The method of claim 2, wherein determining the transmission parameter of the joint transmission according to the first reference signal respectively indicated by the at least one TCI state and/or at least one pair of TCI states comprises:
determining a transmission parameter of a Demodulation Reference Signal (DMRS) port of a physical downlink shared channel (PDSCH) according to a first reference signal respectively indicated by a joint TCI state or a downlink TCI state in the at least one TCI state and/or at least one pair of TCI states; or
determining a transmission parameter of a DMRS port of a physical uplink shared channel (PUSCH) according to a first reference signal respectively indicated by a joint TCI state or an uplink TCI state in the at least one TCI state and/or at least one pair of TCI states.

5. The method of claim 1, wherein,
the first indication information comprises a first media access control (MAC) control element (CE), wherein the first MAC CE is configured to activate at least one TCI state and/or at least one pair of TCI states corresponding to a code point in a TCI field in downlink control information (DCI).

6. The method of claim 1, wherein,
the first indication information comprises a second MAC CE and DCI, wherein the second MAC CE is configured to activate at least one TCI state and/or at least one pair of TCI states corresponding to each of multiple code points in a TCI field in the DCI, and the DCI is configured to indicate one code point in the multiple code points.

7. The method of any one of claims 2 to 6, further comprising:
receiving second indication information sent by the network device, wherein the second indication information is configured to indicate a mapping relationship between the at least one TCI state and/or at least one pair of TCI states and at least one DMRS port, or the second indication information is configured to indicate a mapping relationship between the at least one TCI state and/or at least one pair of TCI states and at least one code division multiplexing (CDM) group; or
determining, according to a default mapping relationship, a mapping relationship between the at least one TCI state and/or at least one pair of TCI states and at least one DMRS port, or a mapping relationship between the at least one TCI state and/or at least one pair of TCI states and at least one CDM group.

8. The method of claim 7, wherein determining the transmission parameter of the joint transmission according to the first reference signal respectively indicated by the at least one TCI state and/or at least one pair of TCI states comprises:
determining that all transmission parameters corresponding to a first reference signal indicated by a first TCI state in the at least one TCI state and/or at least one pair of TCI states are used for a corresponding first DMRS port or first CDM group.

9. The method of claim 7, wherein determining the transmission parameter of the joint transmission according to the first reference signal respectively indicated by the at least one TCI state and/or at least one pair of TCI states comprises:
determining that transmission parameters except at least one designated transmission parameter in transmission parameters corresponding to a first reference signal indicated by a second TCI state in the at least one TCI state and/or at least one pair of TCI states are used for a corresponding second DMRS port or second CDM group; or
determining that at least one designated transmission parameter corresponding to a first reference signal indicated by a designated TCI state is used for the second DMRS port or the second CDM group.

10. The method of claim 9, wherein the designated TCI state comprises any of:
a TCI state with a minimum TCI state identifier, a TCI state indicated by a low bit of a MAC CE, or a first TCI state indicated by the first indication information.

11. The method of any one of claims 1-10, further comprising:
receiving third indication information sent by the network device, wherein the third indication information is configured to indicate a second reference signal corresponding to each channel measurement resource (CMR) or channel state information reference signal (CSI-RS) port group, or a second reference signal corresponding to each CMR group or CSI-RS port group set, wherein one CMR group comprises at least one CMR, and one CSI-RS port group set comprises at least one CSI-RS port group;
determining a transmission parameter corresponding to each second reference signal; and
sending fourth indication information to the network device, wherein the fourth indication information is configured to indicate a transmission parameter corresponding to at least one second reference signal.

12. The method of claim 11, wherein the fourth indication information is indicated by a sounding reference signal (SRS), or the fourth indication information is included in channel state information (CSI).

13. The method of claim 11, wherein,
the fourth indication information comprises an absolute value of the transmission parameter corresponding to each second reference signal; or,
the fourth indication information comprises a relative value of the transmission parameter corresponding to at least one second reference signal relative to a transmission parameter corresponding to a designated second reference signal.

14. The method of claim 13, further comprising:
receiving fifth indication information sent by the network device, wherein the fifth indication information is configured to indicate at least one designated second reference signal.

15. The method of claim 14, further comprising:
determining a second reference signal that meets a designated condition as the designated second reference signal; and
sending sixth indication information to the network device, wherein the sixth indication information is configured to indicate the at least one designated second reference signal.

16. The method of claim 15, further comprising:
in response to a delay corresponding to a candidate second reference signal being less than a delay corresponding to each of remaining second reference signals, determining that the candidate second reference signal meets the designated condition; or,
in response to a delay corresponding to a candidate second reference signal in any second reference signal group being less than a delay corresponding to each of remaining second reference signals in the any reference signal group, determining that the candidate second reference signal in the any reference signal group meets the designated condition.

17. A method for indicating a transmission configuration indication state, performed by a network device, and the method comprising:
sending first indication information to a terminal, wherein the first indication information is configured to indicate at least one transmission configuration indication (TCI) state and/or at least one pair of TCI states for joint transmission.

18. The method of claim 17, wherein,
the first indication information comprises a first media access control (MAC) control element (CE), wherein the first MAC CE is configured to activate at least one TCI state and/or at least one pair of TCI states corresponding to a code point in a TCI field in downlink control information (DCI).

19. The method of claim 17, wherein,
the first indication information comprises a second MAC CE and DCI, wherein the second MAC CE is configured to activate at least one TCI state and/or at least one pair of TCI states corresponding to each of multiple code points in a TCI field in the DCI, and the DCI is configured to indicate one code point in the multiple code points.

20. The method of any one of claims 17-19, further comprising:
sending second indication information to the terminal, wherein the second indication information is configured to indicate a mapping relationship between the at least one TCI state and/or at least one pair of TCI states and at least one demodulation reference signal (DMRS) port, or the second indication information is configured to indicate a mapping relationship between the at least one TCI state and/or at least one pair of TCI states and at least one code division multiplexing (CDM) group.

21. The method of any one of claims 17-20, further comprising:
sending third indication information to the terminal, wherein the third indication information is configured to indicate a second reference signal corresponding to each channel measurement resource (CMR) or a channel state information reference signal (CSI-RS) port group, or a second reference signal corresponding to each CMR group or CSI-RS port group set, wherein one CMR group comprises at least one CMR, and one CSI-RS port group set comprises at least one CSI-RS port group, wherein the second reference signal is different from a first reference signal indicated by the TCI state; and
receiving fourth indication information sent by the terminal, wherein the fourth indication information is configured to indicate a transmission parameter corresponding to at least one second reference signal.

22. The method of claim 21, wherein the fourth indication information is indicated by a sounding reference signal (SRS), or the fourth indication information is included in channel state information (CSI).

23. The method of claim 21, wherein
the fourth indication information comprises an absolute value of the transmission parameter corresponding to each second reference signal; or,
the fourth indication information comprises a relative value of the transmission parameter corresponding to at least one second reference signal relative to a transmission parameter corresponding to a designated second reference signal.

24. The method of claim 23, further comprising:
sending fifth indication information to the terminal, wherein the fifth indication information is configured to indicate at least one designated second reference signal; or,
receiving sixth indication information sent by the terminal, wherein the sixth indication information is configured to indicate the at least one designated second reference signal.

25. A communication device, applied on a terminal side, comprising:
a transceiver module, configured to receive first indication information sent by a network device, wherein the first indication information is configured to indicate at least one transmission configuration indication (TCI) state and/or at least one pair of TCI states for joint transmission.

26. A communication device, applied on a network device side, comprising:
a transceiver module, configured to send first indication information to a terminal, wherein the first indication information is configured to indicate at least one transmission configuration indication (TCI) state and/or at least one pair of TCI states for joint transmission.

27. A communication device, comprising a processor and a memory having a computer program stored therein, wherein the processor executes the computer program stored in the memory, to cause the communication device to perform the method of any one of claims 1 to 16, or the method of any one of claims 17 to 24.

28. A computer-readable storage medium for storing instructions, wherein when the instructions are executed, the method of any one of claims 1 to 16 is performed, or the method of any one of claims 17 to 24 is performed.
